# EUROPEAN PATENT APPLICATION

(11) **EP 4 142 362 A1**
(43) Date of publication of application: **01.03.2023**
(21) Application number: 21795298.5
(22) Date of filing: 29.04.2021
(51) Int. Cl.: H04W 28/24

(54) **COMMUNICATION METHOD AND APPARATUS**

(30) Priority: 30.04.2020 CN 202010368267
(71) Applicant: Huawei Technologies Co., Ltd., Longgang District Shenzhen, Guangdong 518129 (CN)
(72) Inventor: ZENG, Qinghai, Shenzhen, Guangdong 518129 (CN); HUANG, Qufang, Shenzhen, Guangdong 518129 (CN)
(74) Representative: Goddar, Heinz J.
(86) International application number: PCT/CN2021/091135
(87) International publication number: WO 2021/219098

(57) **Abstract**

This application relates to the field of communication technologies, and discloses a communication method and apparatus. The method includes: A network device receives indication information. The indication information indicates that there is an association relationship between M QoS flows. The network device may further process the M QoS flows based on the indication information. In this manner, when processing the M QoS flows, the network device considers the association relationship between the M QoS flows, to help satisfy a synchronization requirement between different data flows.

## Description

### CROSS-REFERENCE TO RELATED APPLICATIONS

This application claims priority to Chinese Patent Application No. 202010368267.1, filed with the China National Intellectual Property Administration on April 30, 2020 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication network, an operator can provide a richer variety of services such as voice, data, and video services for a user. Different services have different requirements on a delay, a bandwidth, or the like. Using a multimedia service as an example, importance of different data flows is different. For example, there are a plurality of sound channels for an immersive voice and audio service (immersive voice and audio service, IVAS). A priority of a data flow on a main sound channel is higher than that of a data flow on a surround sound channel, and a priority of a data flow on a base layer of a scalable video coding (Scalable Video Coding, SVC) video is higher than that of an extension layer.

To implement differentiation of various data flows, a quality of service (quality of service, QoS) solution is introduced into a 5th generation (5th generation, 5G) communication system, to provide, for different service requirements, network services of different quality of service. Specifically, a terminal device may establish one or more PDU sessions. A plurality of data flows of different QoS requirements may be transmitted in each PDU session, where the data flow is referred to as a QoS flow.

However, for a multimedia service, synchronization may be further required between different data flows. For example, for a multimedia service in which a video, audio, and a text coexist, it is required that a video, audio, and a text of a same frame be synchronously sent to a receive end, to implement synchronous reproduction of the three types of information.

### SUMMARY

This application provides a communication method and apparatus, to help satisfy a synchronization requirement between different data flows.

According to a first aspect, an embodiment of this application provides a communication method. The method may be applied to a first network device, or may be applied to a chip inside the first network device. For example, the method is applied to the first network device. In this method, the first network device receives indication information. The indication information indicates that there is an association relationship between M QoS flows, and M is an integer greater than 1. The first network device may further process the M QoS flows based on the indication information.

In this manner, when processing the M QoS flows, the network device considers the association relationship between the M QoS flows, to help satisfy a synchronization requirement between different data flows.

In a possible design, that the first network device processes the M QoS flows includes: The first network device admits or rejects setup requests of the M QoS flows; or admits or rejects modification requests of the M QoS flows.

In a possible design, that the first network device processes the M QoS flows includes: The first network device determines bursts to which data packets in the M QoS flows belong, and processes a data packet in the M QoS flows that belongs to a first burst. After processing the data packet that belongs to the first burst, the first network device processes a data packet in the M QoS flows that belongs to a second burst.

In this manner, when processing the data packets in the M QoS flows, the network device performs processing by using a burst as a unit, and does not perform processing across bursts. For example, air interface transmission in a next burst starts only after air interface transmission in a burst ends, to help implement that data packets in a same burst synchronously arrive at a receive end within a time interval. This effectively avoids a problem that after a part of data packets in the first burst are transmitted, a part of data packets in the second burst are transmitted, and then a remaining part of the data packets in the first burst are transmitted, resulting in a large delay (namely, asynchronization) for the data packets in the same burst to arrive at the receive end.

In a possible design, that the first network device determines bursts to which data packets in the M QoS flows belong includes: The first network device determines, based on burst identifier information of the data packets in the M QoS flows, the bursts to which the data packets in the M QoS flows belong. Alternatively, the first network device determines, based on payload information of the data packets in the M QoS flows, the bursts to which the data packets in the M QoS flows belong. Alternatively, the first network device determines, based on a distinguishing identifier between different bursts, the bursts to which the data packets in the M QoS flows belong. Alternatively, the first network device determines, based on a transmission time interval between data packets of different bursts, the bursts to which the data packets in the M QoS flows belong.

In a possible design, that the first network device processes a data packet in the M QoS flows that belongs to a first burst includes: The first network device transmits, based on priorities of the M QoS flows, the data packet in the M QoS flows that belongs to the first burst, so that data transmission of a QoS flow with a high priority can be preferentially ensured. Alternatively, the first network device transmits, based on transmission ratio information of the M QoS flows, the data packet in the M QoS flows that belongs to the first burst, so that it can be effectively ensured that different data flows arrive at the receive end in a balanced manner. Alternatively, the first network device transmits, in a first in first service manner, the data packet in the M QoS flows that belongs to the first burst.

In a possible design, that the first network device processes a data packet in the M QoS flows that belongs to a first burst includes: After determining that the data packet that belongs to the first burst exceeds a transmission delay requirement, the first network device discards a data packet in the M QoS flows that belongs to the first burst and that has not been transmitted.

In a possible design, the indication information includes M pieces of association information respectively corresponding to the M QoS flows, and the M pieces of association information are the same.

In a possible design, the M QoS flows belong to a first PDU session. The indication information includes association information corresponding to the first PDU session. The association information indicates that the first PDU session is an associated session. There is an association relationship between QoS flows included in the associated session.

In a possible design, the association information includes an association-relationship identifier and/or association-relationship type information.

In a possible design, the association-relationship type information indicates an association-relationship type, and the association-relationship type includes at least one of a first type, a second type, and a third type. The first type indicates to transmit, based on the priorities of the M QoS flows, data packets that are in the M QoS flows and that belong to a same burst. The second type indicates to transmit, based on the transmission ratio information of the M QoS flows, data packets that are in the M QoS flows and that belong to a same burst. The third type indicates to transmit, in the first in first service manner, data packets that are in the M QoS flows and that belong to a same burst.

In a possible design, when the association-relationship type information indicates the second type, the association-relationship type information includes the transmission ratio information, or the indication information further includes the transmission ratio information.

In a possible design, that the first network device receives indication information may be: The first network device receives the indication information from a core network device.

In a possible design, that the first network device receives indication information may be: The first network device receives the indication information from a second network device. The second network device is a primary network device of a terminal device, and the first network device is a secondary network device of the terminal device. Alternatively, the second network device is a source network device of the terminal device, and the first network device is a target network device of the terminal device.

In a possible design, the indication information includes at least one of the following: (1) an identifier of an associated session, where there is an association relationship between QoS flows included in the associated session, and the associated session includes the M QoS flows; (2) identifiers of a plurality of QoS flows between which there is an association relationship, where the plurality of QoS flows between which there is the association relationship include the M QoS flows; (3) identifiers of logical channels corresponding to a plurality of QoS flows between which there is an association relationship; (4) identifiers of data radio bearers DRBs corresponding to a plurality of QoS flows between which there is an association relationship; and (5) a plurality of TFTs, where there is an association relationship between QoS flows respectively matching the plurality of TFTs, and the QoS flows respectively matching the plurality of TFTs include the M QoS flows.

In a possible design, the indication information further includes an association-relationship identifier and association-relationship type information.

In a possible design, that the first network device receives indication information may be: The first network device receives the indication information from a terminal device.

In a possible design, logical channels corresponding to the M QoS flows are located in different logical channel groups.

It should be noted that, in a possible replacement manner, the communication method provided in the first aspect may alternatively be described as: receiving indication information, where the indication information indicates a synchronization QoS flow set to which a first QoS flow belongs. The network device may further process a QoS flow in the synchronization QoS flow set based on the indication information.

In a possible design, the indication information may include at least one of the following: an association-relationship identifier, association-relationship type information, and an association-relationship indication. QoS flows having a same association-relationship identifier belong to a same synchronization QoS flow set. QoS flows having a same association-relationship type belong to a same synchronization QoS flow set. QoS flows included in a PDU session having the association-relationship indication belong to a same synchronization QoS flow set. For example, when the indication information includes the association-relationship identifier, it may be understood that the indication information indicates an identifier of the synchronization QoS flow set to which the QoS flows belong. When the indication information includes the association-relationship type information, it may be understood that the indication information indicates a type of the synchronization QoS flow set to which the QoS flows belong. When the indication information includes the association-relationship indication, it may be understood that the indication information indicates that all the QoS flows included in the PDU session belong to the same synchronization QoS flow set.

According to a second aspect, an embodiment of this application provides a communication method. The method may be applied to a core network device (for example, an SMF network element or an AMF network element), or may be applied to a chip inside the core network device. For example, the method is applied to the core network device. In this method, the core network device determines indication information. The indication information indicates that there is an association relationship between M QoS flows, and M is an integer greater than 1. The core network device sends the indication information to a network device.

In a possible design, the indication information includes M pieces of association information respectively corresponding to the M QoS flows, and the M pieces of association information are the same.

In a possible design, the M QoS flows belong to a first PDU session. The indication information includes association information corresponding to the first PDU session. The association information indicates that the first PDU session is an associated session. There is an association relationship between QoS flows included in the associated session.

In a possible design, the association information includes an association-relationship identifier and/or association-relationship type information.

In a possible design, the association-relationship type information indicates an association-relationship type, and the association-relationship type includes at least one of a first type, a second type, and a third type. The first type indicates to transmit, based on priorities of the M QoS flows, data packets that are in the M QoS flows and that belong to a same burst. The second type indicates to transmit, based on transmission ratio information of the M QoS flows, data packets that are in the M QoS flows and that belong to a same burst. The third type indicates to transmit, in a first in first service manner, data packets that are in the M QoS flows and that belong to a same burst.

In a possible design, when the association-relationship type information indicates the second type, the association-relationship type information includes the transmission ratio information, or the indication information further includes the transmission ratio information.

According to a third aspect, an embodiment of this application provides a communication method. The method may be applied to a terminal device, or may be applied to a chip inside the terminal device. For example, the method is applied to the terminal device. In this method, the terminal device receives indication information. The indication information indicates that there is an association relationship between M QoS flows, or the indication information indicates that there is an association relationship between DRBs or LCHs corresponding to M QoS flows, and M is an integer greater than 1. The terminal device further processes the M QoS flows based on the indication information.

In a possible design, the indication information includes M pieces of association information respectively corresponding to the M QoS flows, and the M pieces of association information are the same.

In a possible design, the M QoS flows belong to a first PDU session. The indication information includes association information corresponding to the first PDU session. The association information indicates that the first PDU session is an associated session. There is an association relationship between QoS flows included in the associated session.

In a possible design, the association information includes an association-relationship identifier and/or association-relationship type information.

In a possible design, the association-relationship type information indicates an association-relationship type, and the association-relationship type includes at least one of a first type, a second type, and a third type. The first type indicates to transmit, based on priorities of the M QoS flows, data packets that are in the M QoS flows and that belong to a same burst. The second type indicates to transmit, based on transmission ratio information of the M QoS flows, data packets that are in the M QoS flows and that belong to a same burst. The third type indicates to transmit, in a first in first service manner, data packets that are in the M QoS flows and that belong to a same burst.

In a possible design, when the association-relationship type information indicates the second type, the indication information further includes the transmission ratio information.

In a possible design, that the terminal device processes the M QoS flows includes: The terminal device determines bursts to which data packets in the M QoS flows belong; and processes a data packet in the M QoS flows that belongs to a first burst, and after processing the data packet that belongs to the first burst, processing a data packet in the M QoS flows that belongs to a second burst.

In a possible design, that the terminal device determines bursts to which data packets in the M QoS flows belong includes: The terminal device determines, based on burst identifier information of the data packets in the M QoS flows, the bursts to which the data packets in the M QoS flows belong. Alternatively, the terminal device determines, based on payload information of the data packets in the M QoS flows, the bursts to which the data packets in the M QoS flows belong. Alternatively, the terminal device determines, based on a distinguishing identifier between different bursts, the bursts to which the data packets in the M QoS flows belong. Alternatively, the terminal device determines, based on a transmission time interval between data packets of different bursts, the bursts to which the data packets in the M QoS flows belong.

In a possible design, that the terminal device processes a data packet in the M QoS flows that belongs to a first burst includes: The terminal device receives an uplink grant from a network device; and transmits, based on the priorities of the M QoS flows and on a resource indicated by the uplink grant, the data packet in the M QoS flows that belongs to the first burst; transmits, based on the transmission ratio information of the M QoS flows and on a resource indicated by the uplink grant, the data packet in the M QoS flows that belongs to the first burst; or transmits, in the first in first service manner and on a resource indicated by the uplink grant, the data packet in the M QoS flows that belongs to the first burst.

In a possible design, that the terminal device processes a data packet in the M QoS flows that belongs to a first burst includes: After determining that the data packet that belongs to the first burst exceeds a transmission delay requirement, the terminal device discards a data packet in the M QoS flows that belongs to the first burst and that has not been transmitted.

It should be noted that the communication method provided in the second aspect or the third aspect corresponds to the first aspect. Therefore, for beneficial effects of related technical features in the second aspect or the third aspect, refer to descriptions in the first aspect. Details are not described again.

According to a fourth aspect, an embodiment of this application provides a communication method. The method may be applied to a CU, or may be applied to a chip inside the CU. For example, the method is applied to the CU. In this method, the CU receives first indication information. The first indication information indicates that there is an association relationship between M QoS flows, and M is an integer greater than 1. The CU processes the M QoS flows based on the first indication information.

In a possible design, that the CU processes the M QoS flows includes: The CU admits or rejects setup requests of the M QoS flows; or admits or rejects modification requests of the M QoS flows.

In a possible design, the method further includes: The CU determines DRBs or LCHs corresponding to the M QoS flows; and sends second indication information to a DU. The second indication information indicates that there is an association relationship between the DRBs or the LCHs corresponding to the M QoS flows.

In a possible design, the second indication information includes an association-relationship identifier and/or association-relationship type information.

In a possible design, the association-relationship type information indicates an association-relationship type, and the association-relationship type includes at least one of a first type, a second type, and a third type. The first type indicates to transmit, based on priorities of the M QoS flows, data packets that are in the M QoS flows and that belong to a same burst. The second type indicates to transmit, based on transmission ratio information of the M QoS flows, data packets that are in the M QoS flows and that belong to a same burst. The third type indicates to transmit, in a first in first service manner, data packets that are in the M QoS flows and that belong to a same burst.

In a possible design, when the association-relationship type information indicates the second type, the indication information further includes the transmission ratio information.

In a possible design, that the CU processes the M QoS flows includes: The CU sends data packets in the M QoS flows to the DU. The data packets in the M QoS flows include burst identifier information.

In a possible design, that the CU processes the M QoS flows includes: The CU receives discarding indication information from the DU, where the discarding indication information includes identifier information of a first burst; and discards a data packet that is in a DRB or a logical channel corresponding to the discarding indication information, that belongs to the first burst, and that has not been transmitted. Herein, the DRB or the logical channel corresponding to the discarding indication information may be a DRB or a logical channel to which the M QoS flows are mapped.

According to a fifth aspect, an embodiment of this application provides a communication method. The method may be applied to a DU, or may be applied to a chip inside the DU. For example, the method is applied to the DU. In this method, the DU receives second indication information from a CU. The second indication information indicates that there is an association relationship between DRBs or LCHs corresponding to M QoS flows. The DU processes data packets in the M QoS flows based on the second indication information.

In a possible design, the second indication information includes an association-relationship identifier and/or association-relationship type information.

In a possible design, the association-relationship type information indicates an association-relationship type, and the association-relationship type includes at least one of a first type, a second type, and a third type. The first type indicates to transmit, based on priorities of the M QoS flows, data packets that are in the M QoS flows and that belong to a same burst. The second type indicates to transmit, based on transmission ratio information of the M QoS flows, data packets that are in the M QoS flows and that belong to a same burst. The third type indicates to transmit, in a first in first service manner, data packets that are in the M QoS flows and that belong to a same burst.

In a possible design, when the association-relationship type information indicates the second type, the indication information further includes the transmission ratio information.

In a possible design, that the DU processes data packets in the M QoS flows includes: The DU determines bursts to which the data packets in the M QoS flows belong; and processes a data packet in the M QoS flows that belongs to a first burst, and after processing the data packet that belongs to the first burst, processes a data packet in the M QoS flows that belongs to a second burst.

In a possible design, that the DU processes a data packet in the M QoS flows that belongs to a first burst includes: The DU transmits, based on the priorities of the M QoS flows, the data packet in the M QoS flows that belongs to the first burst. Alternatively, the DU transmits, based on the transmission ratio information of the M QoS flows, the data packet in the M QoS flows that belongs to the first burst. Alternatively, the DU transmits, in the first in first service manner, the data packet in the M QoS flows that belongs to the first burst.

In a possible design, that the DU processes a data packet in the M QoS flows that belongs to a first burst includes: After determining that the data packet that belongs to the first burst exceeds a transmission delay requirement, the DU sends discarding indication information of the corresponding DRBs or the corresponding logical channels to the CU. The discarding indication information includes identifier information of the first burst, and indicates to discard a data packet that is in the corresponding DRBs or the corresponding logical channels, that belongs to the first burst, and that has not been transmitted.

According to a sixth aspect, an embodiment of this application provides a communication method. The method may be applied to a CU-CP, or may be applied to a chip inside the CU-CP. For example, the method is applied to the CU-CP. In this method, the CU-CP receives first indication information. The first indication information indicates that there is an association relationship between M QoS flows. The CU-CP processes the M QoS flows based on the first indication information.

In a possible design, that the CU-CP processes the M QoS flows includes: The CU-CP admits or rejects setup requests of the M QoS flows; or admits or rejects modification requests of the M QoS flows.

In a possible design, the method further comprises: The CU-CP determines DRBs or LCHs corresponding to the M QoS flows; and sends second indication information to a DU. The second indication information indicates that there is an association relationship between the DRBs or the LCHs corresponding to the M QoS flows.

In a possible design, the second indication information includes an association-relationship identifier and/or association-relationship type information.

In a possible design, the association-relationship type information indicates an association-relationship type, and the association-relationship type includes at least one of a first type, a second type, and a third type. The first type indicates to transmit, based on priorities of the M QoS flows, data packets that are in the M QoS flows and that belong to a same burst. The second type indicates to transmit, based on transmission ratio information of the M QoS flows, data packets that are in the M QoS flows and that belong to a same burst. The third type indicates to transmit, in a first in first service manner, data packets that are in the M QoS flows and that belong to a same burst.

In a possible design, when the association-relationship type information indicates the second type, the indication information further includes the transmission ratio information.

According to a seventh aspect, an embodiment of this application provides a communication method. The method may be applied to a CU-UP, or may be applied to a chip inside the CU-UP. For example, the method is applied to the CU-UP. In this method, the CU-UP receives discarding indication information from a DU. The discarding indication information includes identifier information of a first burst. The CU-UP further discards a data packet that is in a DRB or a logical channel corresponding to the discarding indication information, that belongs to the first burst, and that has not been transmitted. Alternatively, in this method, the CU-UP receives third indication information from a CU-CP. The third indication information indicates a burst identification manner. The CU-UP determines, based on the third indication information, a burst to which a data packet belongs.

According to an eighth aspect, this application provides a communication system. The communication system includes a first network device and a core network device. For example, the first network device may include a CU and a DU. Further, the CU may include a CU-CP and a CU-UP. The first network device may be configured to perform the method in any one of the possible designs or implementations of the first aspect and the fourth aspect to the seventh aspect, and the core network device may be configured to perform the method in any one of the possible designs or implementations of the second aspect.

In an embodiment, the core network device is configured to determine indication information, where the indication information indicates that there is an association relationship between M QoS flows, and M is an integer greater than 1; and send the indication information to the first network device. The first network device is configured to receive the indication information from the core network device.

In a possible design of this embodiment, the first network device is further configured to process the M QoS flows based on the indication information.

In a possible design of this embodiment, the communication system further includes a second network device. The first network device is further configured to send the indication information to the second network device. The second network device is configured to receive the indication information from the first network device, and process the M QoS flows based on the indication information. The first network device is a primary network device of a terminal device, and the second network device is a secondary network device of the terminal device.

In a possible design of this embodiment, the communication system further includes a second network device. The first network device is further configured to send the indication information to the second network device. The second network device is configured to receive the indication information from the first network device, and process the M QoS flows based on the indication information. The first network device is a source network device of a terminal device, and the second network device is a target network device of the terminal device.

According to a ninth aspect, this application provides a communication apparatus. The communication apparatus may be a network device (for example, a first network device) or a chip disposed in the network device. For example, the network device may include a CU and a DU. Further, the CU may include a CU-CP and a CU-UP. The communication apparatus has a function of implementing the first aspect and the fourth aspect to the seventh aspect. For example, the communication apparatus includes a corresponding module, unit, or means (means) for performing steps in the first aspect and the fourth aspect to the seventh aspect. The function, unit, or means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a network device, and the processing unit may be configured to perform some internal operations of the communication apparatus. Functions performed by the processing unit and the communication unit may correspond to the steps in the first aspect and the fourth aspect to the seventh aspect.

In a possible design, the communication apparatus includes a processor, and may further include a transceiver. The transceiver is configured to receive and send a signal, and the processor executes program instructions to complete the method in any one of the possible designs or implementations of the first aspect and the fourth aspect to the seventh aspect. The communication apparatus may further include one or more memories, and the memory is configured to be coupled to the processor. The one or more memories may be integrated with the processor, or may be disposed independent of the processor. This is not limited in this application. The memory may store a computer program or instructions necessary for implementing the functions in the first aspect and the fourth aspect to the seventh aspect. The processor may execute the computer program or instructions stored in the memory. When the computer program or the instructions is/are executed, the communication apparatus is enabled to implement the method in any one of the possible designs or implementations of the first aspect and the fourth aspect to the seventh aspect.

In a possible design, the communication apparatus includes a processor and a memory. The memory may store a computer program or instructions necessary for implementing the functions in the first aspect and the fourth aspect to the seventh aspect. The processor may execute the computer program or instructions stored in the memory. When the computer program or the instructions is/are executed, the communication apparatus is enabled to implement the method in any one of the possible designs or implementations of the first aspect and the fourth aspect to the seventh aspect.

In a possible design, the communication apparatus includes at least one processor and an interface circuit. The at least one processor is configured to communicate with another apparatus through the interface circuit, and perform the method in any one of the possible designs or implementations of the first aspect and the fourth aspect to the seventh aspect.

According to a tenth aspect, this application provides a communication apparatus. The communication apparatus may be a core network device or a chip disposed in the core network device. The communication apparatus has a function of implementing the second aspect. For example, the communication apparatus includes a corresponding module, unit, or means for performing steps in the second aspect. The function, unit, or means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device, and the processing unit may be configured to perform some internal operations of the communication apparatus. Functions performed by the processing unit and the communication unit may correspond to the steps in the second aspect.

In a possible design, the communication apparatus includes a processor and a memory. The memory may store a computer program or instructions necessary for implementing the functions in the second aspect. The processor may execute the computer program or instructions stored in the memory. When the computer program or the instructions is/are executed, the communication apparatus is enabled to implement the method in any one of the possible designs or implementations of the second aspect.

In a possible design, the communication apparatus includes at least one processor and an interface circuit. The at least one processor is configured to communicate with another apparatus through the interface circuit, and perform the method in any one of the possible designs or implementations of the second aspect. The communication apparatus may further include one or more memories, and the memory is configured to be coupled to the processor. The one or more memories may be integrated with the processor, or may be disposed independent of the processor. This is not limited in this application. The memory may store a computer program or instructions necessary for implementing the functions in the second aspect. The processor may execute the computer program or instructions stored in the memory. When the computer program or the instructions is/are executed, the communication apparatus is enabled to implement the method in any one of the possible designs or implementations of the second aspect.

According to an eleventh aspect, this application provides a communication apparatus. The communication apparatus may be a terminal device or a chip disposed in the terminal device. The communication apparatus has a function of implementing the third aspect. For example, the communication apparatus includes a corresponding module, unit, or means for performing steps in the third aspect. The function, unit, or means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device, and the processing unit may be configured to perform some internal operations of the communication apparatus. Functions performed by the processing unit and the communication unit may correspond to the steps in the third aspect.

In a possible design, the communication apparatus includes a processor, and may further include a transceiver. The transceiver is configured to receive and send a signal, and the processor executes program instructions to complete the method in any one of the possible designs or implementations of the third aspect. The communication apparatus may further include one or more memories, and the memory is configured to be coupled to the processor. The one or more memories may be integrated with the processor, or may be disposed independent of the processor. This is not limited in this application. The memory may store a computer program or instructions necessary for implementing the functions in the third aspect. The processor may execute the computer program or instructions stored in the memory. When the computer program or the instructions is/are executed, the communication apparatus is enabled to implement the method in any one of the possible designs or implementations of the third aspect.

In a possible design, the communication apparatus includes a processor and a memory. The memory may store a computer program or instructions necessary for implementing the functions in the third aspect. The processor may execute the computer program or instructions stored in the memory. When the computer program or the instructions is/are executed, the communication apparatus is enabled to implement the method in any one of the possible designs or implementations of the third aspect.

In a possible design, the communication apparatus includes at least one processor and an interface circuit. The at least one processor is configured to communicate with another apparatus through the interface circuit, and perform the method in any one of the possible designs or implementations of the third aspect.

According to a twelfth aspect, this application provides a computer-readable storage medium, and the computer-readable storage medium stores computer-readable instructions. When a computer reads and executes the computer-readable instructions, the computer is enabled to perform the method in any possible design of the first aspect to the seventh aspect.

According to a thirteenth aspect, this application provides a computer program product. When a computer reads and executes the computer program product, the computer is enabled to perform the method in any possible design of the first aspect to the seventh aspect.

According to a fourteenth aspect, this application provides a chip. The chip includes a processor. The processor is coupled to a memory, and is configured to read and execute a software program stored in the memory, to implement the method in any possible design of the first aspect to the seventh aspect.

These or other aspects of this application are more concise and easier to understand in the descriptions of the following embodiments.

### BRIEF DESCRIPTION OF DRAWINGS

FIG. 1 is a schematic diagram of a network architecture to which an embodiment of this application is applicable;
FIG. 2a is a diagram of an example of a protocol layer structure between a terminal device and a network device according to an embodiment of this application;
FIG. 2b is a schematic diagram of a CU-DU split architecture according to an embodiment of this application;
FIG. 2c is a schematic diagram of another CU-DU split architecture according to an embodiment of this application;
FIG. 2d is a schematic diagram of distribution of an air interface protocol stack according to an embodiment of this application;
FIG. 3a is a schematic diagram of a QoS model in a 5G communication system according to an embodiment of this application;
FIG. 3b is a schematic diagram of a PDU session establishment procedure according to an embodiment of this application;
FIG. 4 is a schematic diagram of transmission of a plurality of video frames according to an embodiment of this application;
FIG. 5 is a schematic flowchart corresponding to a communication method according to Embodiment 1 of this application;
FIG. 6 is a schematic flowchart corresponding to a communication method according to Embodiment 2 of this application;
FIG. 7 is a schematic flowchart corresponding to a communication method according to Embodiment 3 of this application;
FIG. 8 is a schematic flowchart corresponding to a communication method according to Embodiment 5 of this application;
FIG. 9 is a schematic flowchart corresponding to a communication method according to Embodiment 6 of this application;
FIG. 10 is a possible schematic block diagram of an apparatus according to an embodiment of this application;
FIG. 11 is a schematic diagram of a structure of a network device according to an embodiment of this application;
FIG. 12 is a schematic diagram of a structure of a core network device according to an embodiment of this application; and
FIG. 13 is a schematic diagram of a structure of a terminal device according to an embodiment of this application.

### DESCRIPTION OF EMBODIMENTS

The following clearly and completely describes the technical solutions in embodiments of this application with reference to the accompanying drawings in embodiments of this application.

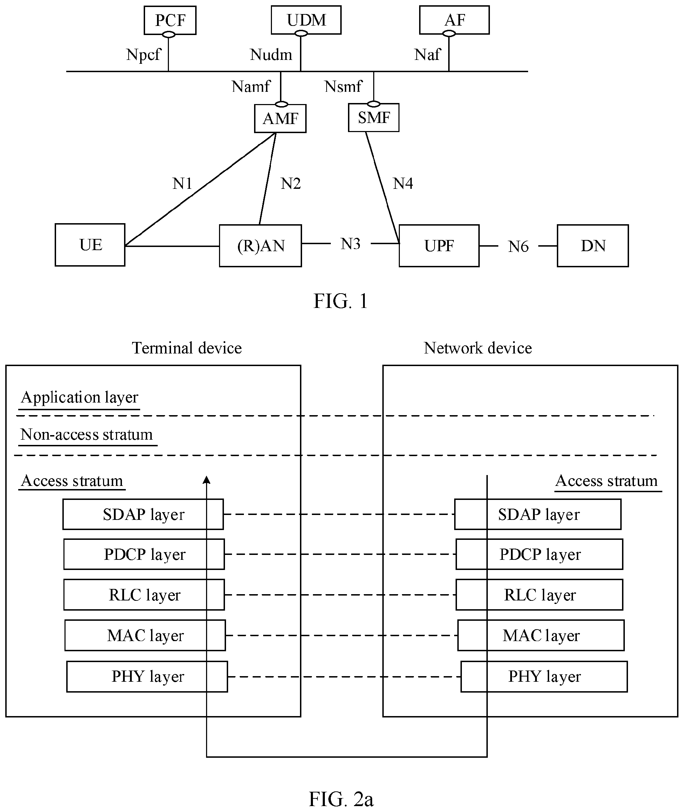

FIG. 1 is a schematic diagram of a network architecture to which an embodiment of this application is applicable. As shown in FIG. 1, a terminal device may access a wireless network, to access a service of an external network (for example, a data network (data network, DN)) through the wireless network, or communicate with another device through the wireless network, for example, may communicate with another terminal device. The wireless network includes a radio access network (radio access network, RAN) and a core network (core network, CN). The RAN is used to access the terminal device to the wireless network, and the CN is used to manage the terminal device and provide a gateway for communicating with the DN.

The following separately describes in detail the terminal device, the RAN, the CN, and the DN in FIG. 1.

### 1. Terminal device

The terminal device includes a device that provides a user with voice and/or data connectivity, for example, may include a handheld device having a wireless connection function, or a processing device connected to a wireless modem. The terminal device may communicate with the core network through the radio access network (radio access network, RAN), and exchange a voice and/or data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine type communication (machine-to-machine/machine type communication, M2M/MTC) terminal device, an internet of things (internet of things, loT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

### 2. RAN

The RAN may include one or more RAN devices, for example, a RAN device 1101 and a RAN device 1102. An interface between the RAN device and the terminal device may be a Uu interface (or referred to as an air interface). Certainly, in future communication, names of these interfaces may remain unchanged, or may be replaced with other names. This is not limited in this application.

The RAN device is a node or a device that enables the terminal device to access the radio network, and the RAN device may also be referred to as a network device or a base station. For example, the RAN device includes but is not limited to a next generation NodeB (next generation NodeB, gNB) in a 5G communication system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmitting point (transmitting point, TP), and a mobile switching center.

### (1) Protocol layer structure

Communication between the RAN device and the terminal device complies with a protocol layer structure. For example, a control plane protocol layer structure may include functions of protocol layers such as an RRC layer, a packet data convergence protocol (packet data convergence protocol, PDCP) layer, a radio link control (radio link control, RLC) layer, a media access control (media access control, MAC) layer, and a physical layer, and a user plane protocol layer structure may include the functions of the protocol layers such as the PDCP layer, the RLC layer, the MAC layer, and the physical layer. In a possible implementation, a service data adaptation protocol (service data adaptation protocol, SDAP) layer may be further included above the PDCP layer.

Data transmission between the network device and the terminal device is used as an example. Data transmission needs to pass through a user plane protocol layer such as the SDAP layer, the PDCP layer, the RLC layer, the MAC layer, or the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. FIG. 2a is a schematic diagram of downlink data transmission between layers. In FIG. 2a, a downward arrow represents data sending, and an upward arrow represents data receiving. After obtaining data from an upper layer, a PDCP layer transmits the data to an RLC layer and a MAC layer, the MAC layer generates a transport block, and then wireless transmission is performed through a physical layer. Data is correspondingly encapsulated at each layer. Data received by a layer from an upper layer of the layer is considered as a service data unit (service data unit, SDU) of the layer. After being encapsulated at the layer, the data becomes a PDU, and is then transferred to a next layer. For example, data received by the PDCP layer from an upper layer is referred to as a PDCP SDU, and data sent by the PDCP layer to a lower layer is referred to as a PDCP PDU. Data received by the RLC layer from an upper layer is referred to as an RLC SDU, and data sent by the RLC layer to a lower layer is referred to as an RLC PDU. In a protocol, the layers correspond to each other in a form of channels. The RLC layer corresponds to the MAC layer through a logical channel (logical channel, LCH), the MAC layer corresponds to the physical layer through a transport channel (transport channel), and the physical layer corresponds to a physical layer at another end through a physical channel (physical channel).

For example, it can be further learned from FIG. 2a that, the terminal device further has an application layer and a non-access stratum. The application layer may be configured to provide a service for an application program installed on the terminal device. For example, downlink data received by the terminal device may be sequentially transmitted from the physical layer to the application layer, and then is provided by the application layer for the application program. For another example, the application layer may obtain data generated by the application program, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

### (2) CU and DU

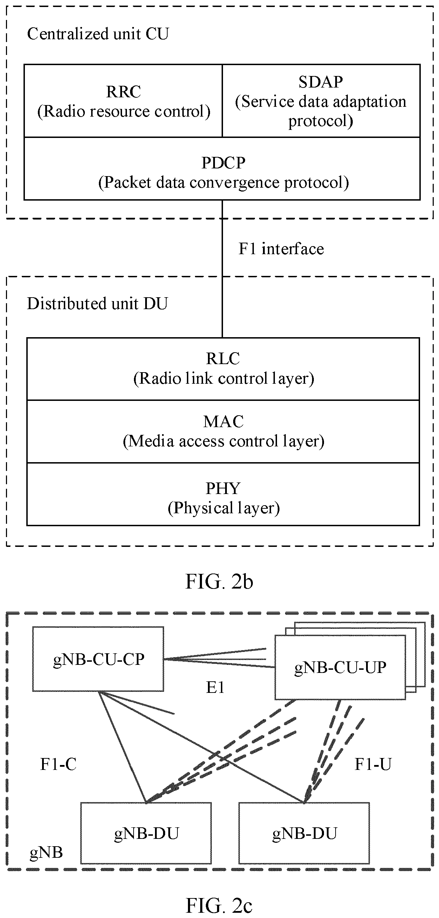

In embodiments of this application, the RAN device may include one or more centralized units (centralized units, CUs) and one or more distributed units (distributed units, DUs), and a plurality of DUs may be centrally controlled by one CU. For example, an interface between the CU and the DU may be referred to as an F1 interface. A control plane (control panel, CP) interface may be an F1-C interface, and a user plane (user panel, UP) interface may be an F1-U interface. Division may be performed for the CU and the DU based on a protocol layer of a wireless network. For example, as shown in FIG. 2b, the functions of the PDCP layer and the protocol layers above the PDCP layers are set on the CU, and the protocol layers (for example, the RLC layer and the MAC layer) below the PDCP layer are set on the DU.

It may be understood that division of processing functions of the CU and the DU based on the protocol layers is merely an example, and the processing functions of the CU and the DU may alternatively be divided in another manner. For example, the functions of the protocol layers above the PDCP layer are set on the CU, and the functions of the PDCP layer and the protocol layers below the PDCP layer are set on the DU. For another example, the CU or the DU may have functions of more protocol layers. For another example, the CU or the DU may have some processing functions of a protocol layer. In a design, some functions of the RLC layer and a function of a protocol layer above the RLC layer are deployed on the CU, and other functions of the RLC layer and a function of a protocol layer below the RLC layer are deployed on the DU. In another design, division of functions of the CU or the DU may be performed based on a service type or another system requirement. For example, division may be performed based on a delay. Functions whose processing time needs to satisfy a delay requirement are deployed on the DU, and functions whose processing time does not need to satisfy the delay requirement are deployed on the CU. In another design, the CU may alternatively have one or more functions of the core network. For example, the CU may be disposed on a network side for ease of centralized management; and the DU may have a plurality of radio frequency functions, or the radio frequency functions may be disposed remotely. This is not limited in embodiments of this application.

For example, functions of the CU may be implemented by one entity or different entities. For example, as shown in FIG. 2c, functions of a CU may be further divided, that is, a control plane and a user plane are separated, and are implemented by using different entities, which are respectively a control plane CU entity (namely, a CU-CP entity) and a user plane CU entity (namely, a CU-UP entity). The CU-CP entity and the CU-UP entity may be coupled to a DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

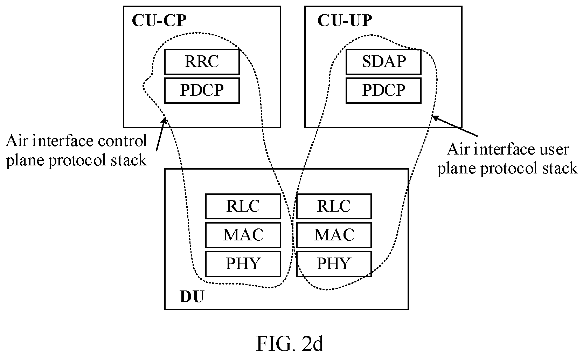

Based on FIG. 2c, FIG. 2d is a schematic diagram of distribution of an air interface protocol stack. As shown in FIG. 2d, for both a user plane and a control plane, an air interface protocol stack may be that an RLC, a MAC, and a PHY are on a DU, and a PDCP and protocol layers above the PDCP are on a CU.

It should be noted that in the architectures shown in FIG. 2b to FIG. 2d, signaling generated by the CU may be sent to the terminal device by using the DU, or signaling generated by the terminal device may be sent to the CU by using the DU. The DU may transparently transmit the signaling to the terminal device or the CU by directly encapsulating the signaling at a protocol layer without parsing the signaling. In the following embodiments, if transmission of the signaling between the DU and the terminal device is described, sending or receiving the signaling by the DU is applicable to the scenario. For example, signaling of an RRC layer or a PDCP layer is finally processed as signaling of a physical layer and sent to the terminal device, or signaling of an RRC layer or a PDCP layer is converted from received signaling of a physical layer. In this architecture, the signaling of the RRC or the PDCP layer may also be considered to be sent by the DU, or sent by the DU and a radio frequency apparatus.

### 3. CN

The CN may include one or more CN devices. Using a 5G communication system as an example, the CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The AMF network element is a control plane network element provided by the operator network, and is responsible for access control and mobility management for accessing the operator network by the terminal device, for example, including functions such as mobility status management, allocation of a temporary user identity, and user authentication and authorization.

The SMF network element is a control plane network element provided by the operator network, and is responsible for managing a protocol data unit (protocol data unit, PDU) session of the terminal device. The PDU session is a channel used to transmit a PDU, and the terminal device needs to transmit a PDU to the DN through the PDU session. The SMF network element is responsible for establishment, maintenance, deletion, and the like of the PDU session. The SMF network element includes functions related to a session, for example, session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes user plane-related functions such as data packet routing and transmission, packet detection, service usage reporting, quality of service (Quality of Service, QoS) processing, lawful interception, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The UDM network element is a control plane network element provided by the operator network, and is responsible for storing information such as a subscription permanent identifier (subscription permanent identifier, SUPI), a security context (security context), and subscription data of a subscriber in the operator network.

The AF network element is a function network element configured to provide various business services and can interact with a core network through another network element and interact with a policy management framework to perform policy management.

In addition, although not shown, the CN may further include another possible network element, for example, a network exposure function (network exposure function, NEF) network element or a unified data repository (unified data repository, UDR) network element. The NEF network element is configured to provide a framework, authentication, and an interface that are related to network capability exposure, and transmit information between a 5G system network function and another network function. The UDR network element is mainly configured to store subscription data, policy data, structured data for exposure, and application data that are related to a user.

### 4. DN

The DN may also be referred to as a packet data network (packet data network, PDN), and is a network located outside the operator network. The operator network may access a plurality of DNs, and a plurality of services may be deployed on the DNs, to provide a service such as data and/or a voice to the terminal device.

In FIG. 1, Npcf, Nudm, Naf, Namf, Nsmf, N1, N2, N3, N4, and N6 are interface sequence numbers. For meanings of these interface sequence numbers, refer to meanings defined in the related standard protocol. This is not limited herein.

It may be understood that FIG. 1 is shown by using a 5G communication system as an example. The solutions in embodiments of this application may alternatively be applicable to another possible communication system, for example, a future 6th generation (6th generation, 6G) communication system. The foregoing network elements or functions may be network elements in a hardware device, or may be software functions run on dedicated hardware, or may be instantiated virtualization functions on a platform (for example, a cloud platform). Optionally, the foregoing network elements or the functions may be implemented by one device, may be implemented by a plurality of devices, or may be one function module in one device. This is not specifically limited in embodiments of this application.

In the network architecture shown in FIG. 1, data transmission may be performed between the terminal device and the DN by using a PDU session. A plurality of data flows with different QoS requirements may be transmitted in each PDU session, and are referred to as QoS flows.

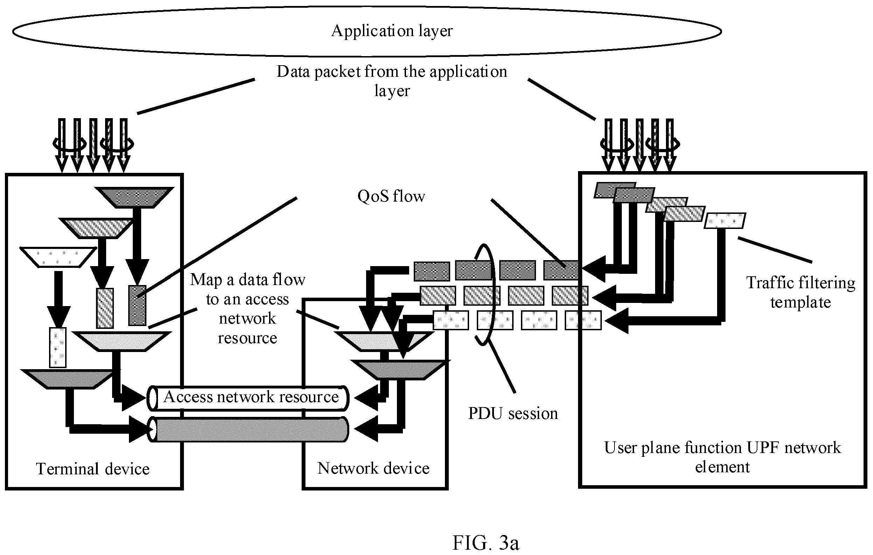

FIG. 3a is a schematic diagram of a QoS model in a 5G communication system. As shown in FIG. 3a, in a downlink direction, after service data flows (service data flows, SDFs) of a downlink PDU session arrive at a UPF network element, the UPF network element may distinguish data packets into different QoS flows by using a traffic filtering template (traffic filtering template, TFT) corresponding to the PDU session. A data packet in the QoS flow is marked with a QoS flow identifier (QoS flow identifier, QFI). The UPF network element transfers the data packet to a network device on an access network side through an N3 interface. After receiving the data packet, the network device determines, based on the QFI corresponding to the data packet, a QoS flow to which the data belongs, and then maps, based on a preconfigured QoS parameter corresponding to the QoS flow, the data packet to a corresponding data radio bearer (data radio bearer, DRB) on a SDAP layer corresponding to the PDU session, that is, delivers the data packet to a PDCP layer entity corresponding to the DRB. Processing in an uplink direction is similar. After receiving a data packet, an upper layer of a terminal device first maps the data packet to a QoS flow, and then delivers the data packet to an SDAP layer entity. The SDAP layer entity continues to map the data packet from the QoS flow to a DRB, that is, delivers the data packet to a PDCP layer entity corresponding to the DRB. Mapping the uplink data packet to the QoS flow and mapping the uplink data packet from the QoS flow to the DRB may be configured by the network device by sending signaling to the terminal device.

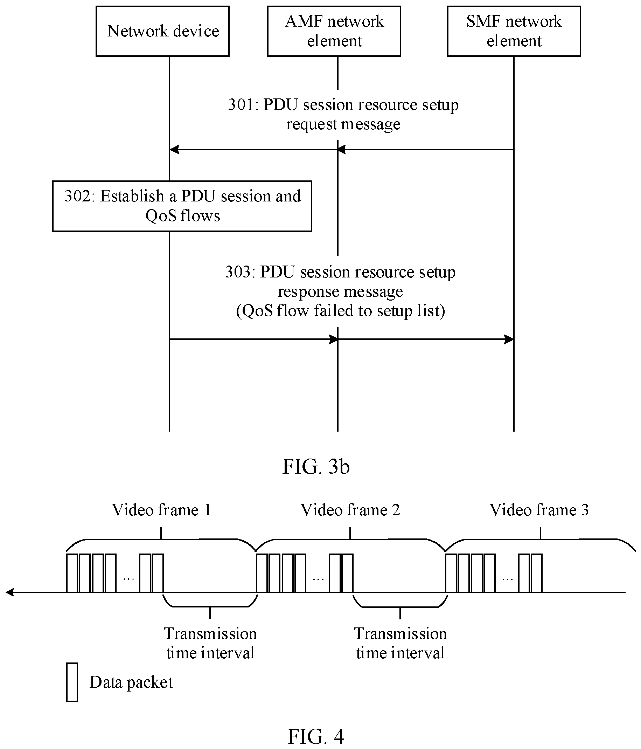

FIG. 3b is a schematic diagram of a PDU session establishment procedure. Refer to FIG. 3b. The procedure includes the following steps.

Step 301: An SMF network element sends a PDU session resource setup request (PDU session resource setup request) message to a network device by using an AMF network element, where the PDU session resource setup request message includes an identifier of a to-be-established PDU session and QoS parameters of a plurality of QoS flows in the PDU session. For example, the plurality of QoS flows include a QoS flow 1, a QoS flow 2, a QoS flow 3, a QoS flow 4, and a QoS flow 5.

The QoS parameter may include a 5G quality of service identifier (5G QoS identifier, 5QI), or may include other possible information. This is not specifically limited. The 5QI is a scalar, and is used to index corresponding 5G QoS characteristics. In an example, the 5G QoS characteristics may include a priority level (priority level), a packet delay budget (packet delay budget, PDB), and the like. The priority level herein indicates a priority of a QoS flow, and a smaller value of the priority level indicates a higher priority.

Step 302: The network device receives the PDU session resource setup request, and establishes the PDU session and the QoS flows based on the PDU session resource setup request.

For example, the network device may admit setup requests of all or a part of QoS flows in a same PDU session. For example, the network device receives setup requests of the QoS flow 1, the QoS flow 2, and the QoS flow 3, and rejects setup requests of the QoS flow 4 and the QoS flow 5.

Step 303: The network device sends a PDU session resource setup response message to the SMF network element by using the AMF network element.

Herein, the PDU session resource setup response message may include a QoS flow failed to setup list (QoS Flow Failed to Setup List). The QoS flow failed to setup list includes an identifier of a rejected QoS flow, for example, identifiers of the QoS flow 4 and the QoS flow 5.

It can be learned from the foregoing step 301 to step 303 that, in the PDU session establishment procedure, the network device may reject setup requests of a part of QoS flows in the PDU session. However, for a multimedia service, synchronous transmission may be required between data flows mapped to different QoS flows. For example, a standard IVAS of 3D voice supports a maximum of 16 sound channels, and synchronization is required between the sound channels. Using five sound channels as an example, data flows of the five sound channels are respectively mapped to a QoS flow 1, a QoS flow 2, a QoS flow 3, a QoS flow 4, and a QoS flow 5 of a same PDU session. If a network device admits setup requests of the QoS flow 1, the QoS flow 2, and the QoS flow 3, and rejects setup requests of the QoS flow 4 and the QoS flow 5, a synchronization requirement between the sound channels cannot be satisfied. As a result, user experience is affected. For another example, in an SVC video service, both a base layer and an extension layer of a same frame of a video need to be synchronously sent to a receive end for video restoration, to obtain clearer video presentation experience. For another example, for a multimedia service in which a video, audio, and a text coexist, it is also required that a video, audio, and a text of a same frame be synchronously sent to a receive end, to implement synchronous reproduction of the three types of information. For another example, for services such as augmented reality, virtual reality, mixed reality, and cloud gaming, synchronous transmission and presentation are also required to ensure service experience.

Based on this, a synchronization QoS flow set (set) is introduced in embodiments of this application. There is an association relationship between a plurality of QoS flows belonging to a same synchronization QoS flow set, so that a network device can process the plurality of QoS flows based on the association relationship between the plurality of QoS flows, to satisfy a synchronization requirement between different data flows.

The following first describes related technical features in embodiments of this application. It should be noted that these explanations are intended to make embodiments of this application easier to understand, but should not be considered as a limitation on the protection scope claimed in this application.

### 1. Synchronization QoS flow set

The synchronization QoS flow set may also be referred to as a synchronization QoS flow group (group) or another possible name. This is not specifically limited.

The synchronization QoS flow set may include a plurality of QoS flows, and the plurality of QoS flows may belong to a same PDU session or may belong to different PDU sessions. In embodiments of this application, an example in which the plurality of QoS flows included in the synchronization QoS flow set belong to a same PDU session is used for description.

When the plurality of QoS flows included in the synchronization QoS flow set belong to a same PDU session, in an example, one PDU session may include one synchronization QoS flow set. For example, a PDU session includes 10 QoS flows, where six QoS flow thereof belong to a same synchronization QoS flow set, and the other four QoS flows do not belong to any synchronization QoS flow set. For another example, a PDU session includes 10 QoS flows, and the 10 QoS flows belong to a same synchronization QoS flow set. In this case, the PDU session may also be referred to as an associated session. In other words, all QoS flows in the associated session belong to a same synchronization QoS flow set. In still another example, one PDU session may include a plurality of synchronization QoS flow sets. For example, a PDU session includes 10 QoS flows, where six QoS flows thereof belong to one synchronization QoS flow set, and the other four QoS flows belong to another synchronization QoS flow set.

### 2. Association information

The association information in embodiments of this application may include an association-relationship identifier (association ID) and/or association-relationship type (association type) information. The association-relationship type information indicates an association-relationship type (where alternatively, the association-relationship type information may be directly referred to as an association-relationship type). For example, the association information may further include other possible information. This is not specifically limited.

In an example, the association information may be association information corresponding to a QoS flow (namely, association information at a QoS flow level). In this case, an association-relationship identifier corresponding to the QoS flow may be an identifier of a synchronization QoS flow set to which the QoS flow belongs, and association-relationship identifiers corresponding to a plurality of QoS flows belonging to the same synchronization QoS flow set are the same. An association-relationship type corresponding to the QoS flow may be a type of the synchronization QoS flow set to which the QoS flow belongs, and association-relationship types corresponding to the plurality of QoS flows belonging to the same synchronization QoS flow set are the same.

In another example, the association information may be association information corresponding to a PDU session (namely, association information at a PDU session level). All QoS flows in the PDU session belong to a same synchronization QoS flow set. In this case, an association-relationship identifier corresponding to the PDU session may be an identifier of a synchronization QoS flow set to which all the QoS flows in the PDU session belong, and an association-relationship type corresponding to the PDU session may be a type of the synchronization QoS flow set to which all the QoS flows in the PDU session belong.

The following explains and describes the type of the synchronization QoS flow set in the foregoing two examples.

The type of the synchronization QoS flow set may indicate a processing manner (which is also referred to as a scheduling manner, a transmission manner, or the like) of data packets in a plurality of QoS flows in the synchronization QoS flow set. For example, the type of the synchronization QoS flow set may be a first type, a second type, or a third type.

The first type indicates to transmit, based on priorities of the plurality of QoS flows in the synchronization QoS flow set, data packets that are in the plurality of QoS flows and that belong to a same burst. In other words, a per-burst (per-burst) data packet in the plurality of QoS flows is scheduled based on the priorities of the plurality of QoS flows. In this case, the plurality of QoS flows in the synchronization QoS flow set may be mapped to different DRBs. For example, each QoS flow in the synchronization QoS flow set may exclusively occupy one DRB, and is not mapped to a same DRB with any other QoS flow. Alternatively, the plurality of QoS flows in the synchronization QoS flow set may be mapped to different logical channels. For example, each QoS flow in the synchronization QoS flow set may exclusively occupy one logical channel, and is not mapped to a same logical channel with any other QoS flow. In an example, the plurality of QoS flows in the synchronization QoS flow set may be mapped to different logical channels of different DRBs, or may be mapped to different logical channels of a same DRB. In embodiments of this application, data transmission of a QoS flow with a high priority can be preferentially ensured in a scheduling manner corresponding to the first type.

The second type indicates to transmit, based on transmission ratio information of the plurality of QoS flows in the synchronization QoS flow set, data packets that are in the plurality of QoS flows and that belong to a same burst. In other words, a per-burst data packet in the plurality of QoS flows is scheduled based on the transmission ratio information of the plurality of QoS flows. In this case, the plurality of QoS flows in the synchronization QoS flow set may be mapped to different DRBs or different logical channels (where a specific implementation may be the same as that of the first type, and details are not described again). The transmission ratio information of the plurality of QoS flows may include a data ratio (data ratio) of the plurality of QoS flows, for example, a ratio of data bit rates or a ratio of data packet quantities of the plurality of QoS flows. Alternatively, the transmission ratio information of the plurality of QoS flows may include data ratio factors (data ratio factors) of the plurality of QoS flows. For example, a value of a data ratio factor of each QoS flow may be an integer from 0 to 63. For example, the synchronization QoS flow set includes three QoS flows, which are respectively a QoS flow 1, a QoS flow 2, and a QoS flow 3. A value of a data ratio factor of the QoS flow 1 is 2, a value of a data ratio factor of the QoS flow 2 is 2, and a value of a data ratio factor of the QoS flow 3 is 5. In this case, the data ratio of the plurality of QoS flows is 2:2:5. In embodiments of this application, when a scheduling manner corresponding to the second type is used, it can be effectively ensured that different data flows of a same multimedia service arrive at a receive end in a balanced manner.

The third type indicates to transmit, in a first in first service (first in first service, FIFS) manner, data packets that are in the plurality of QoS flows in the synchronization QoS flow set and that belong to a same burst. In other words, a per-burst data packet in the plurality of QoS flows is scheduled in the first in first service manner. In this case, the plurality of QoS flows in the synchronization QoS flow set may be mapped to a same DRB (where the DRB may correspond to one logical channel) or a same logical channel.

### 3. Buffer status report

In a 5G communication system, a logical channel may be used to carry data, and data of different service types may be carried through different logical channels. Each logical channel may be associated with one scheduling priority. The priority may be configured by a network device. For example, a relatively high priority may be configured for a logical channel carrying URLLC service data, and a relatively low priority may be configured for a logical channel carrying eMBB service data. When a terminal device has to-be-sent new data but none of logical channels has to-be-sent data or a logical channel with a higher priority has to-be-sent data, the terminal device may trigger a buffer status report (buffer status report, BSR), to indicate a total volume of to-be-sent data of at least one logical channel, so that the network device schedules an air-interface time-frequency resource.

Further, to reduce a quantity of information bits transmitted on an air interface, the terminal device may not separately report a BSR for a logical channel, but report a BSR for a logical channel group (logical channel group, LCG). The BSR reported by the terminal device for the logical channel group indicates a volume of to-be-sent data of the logical channel group. The logical channel group may include one or more logical channels. When configuring an attribute parameter (logicalChannelConfig) of each logical channel, the network device may allocate a corresponding LCG ID to the logical channel. For example, when an LCG ID allocated by the network device to a logical channel 1 is an LCG 1, it indicates that the logical channel 1 belongs to the LCG 1.

### 4. Burst

Data packets of a same burst (burst) are from a same frame of a video and/or audio. A video is used as an example. The video may be formed by continuously playing coherent images. When 24 images are quickly played in one second, human eyes consider that the pictures are continuous pictures (namely, the video). A frame rate is a quantity of images played per second. For example, if the frame rate is 24, 24 images are played per second. If the frame rate is 60, 60 images are played per second. The rest can be deduced by analogy. A burst may be understood as a video frame, and corresponds to an image (that is, one burst may include a data packet corresponding to one image). When the frame rate is 60, duration of a video frame is 1000 ms/60 Hz, which is approximately equal to 16 ms. FIG. 4 is a schematic diagram of a plurality of video frames. As shown in FIG. 4, a video frame 1, a video frame 2, and a video frame 3 are three consecutive video frames. Using the video frame 1 as an example, the video frame 1 may include a plurality of data packets. The plurality of data packets may be distributed in a front segment of the video frame 1 (for example, the plurality of data packets may be distributed in the first 8 ms of 16 ms), and there may be a transmission time interval (gap) between a plurality of data packets of different video frames.

Data packets of a same burst may be mapped to one or more QoS flows. For example, a burst 1 includes 10 data packets. Three data packets thereof are mapped to a QoS flow 1, five data packets are mapped to a QoS flow 2, and the other two data packets are mapped to a QoS flow 3. Because the data packets of the same burst are from a same frame of a video and/or audio, the data packets of the same burst are usually required to be synchronously sent to a receive end within a time interval.

Based on the foregoing related technical features, the following describes in detail the communication method provided in embodiments of this application with reference to Embodiment 1 to Embodiment 6.

For example, the communication method provided in embodiments of this application may include: A network device receives indication information. The indication information indicates that there is an association relationship between M QoS flows. The network device may further process the M QoS flows based on the indication information. In this manner, when processing the M QoS flows, the network device considers the association relationship between the M QoS flows, to help satisfy a synchronization requirement between different data flows.

The method in embodiments of this application is applicable to a plurality of possible scenarios. In different scenarios, the network device may receive, from different devices, the indication information indicating that there is the association relationship between the M QoS flows. In other words, the different devices indicate, to the network device, that there is the association relationship between the M QoS flows. Refer to Embodiment 1 to Embodiment 4.

### Embodiment 1

In Embodiment 1, the network device may receive, from a core network device, the indication information indicating that there is the association relationship between the M QoS flows.

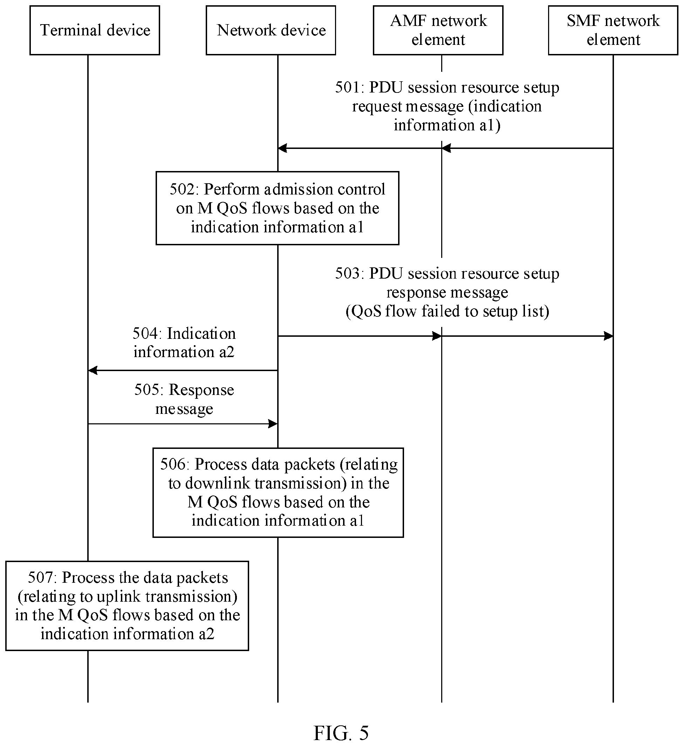

FIG. 5 is a schematic flowchart corresponding to a communication method according to Embodiment 1 of this application. As shown in FIG. 5, the method includes the following steps.

Step 501: An SMF network element sends indication information a1 to the network device by using an AMF network element. Correspondingly, the network device may receive the indication information a1.

A related technical feature related to the indication information a1 is described herein.

### 1. The indication information a1 is explained and described.

The indication information a1 indicates that there is the association relationship between the M QoS flows. In other words, the indication information a1 indicates that the M QoS flows belong to a synchronization QoS flow set. For example, the M QoS flows include a QoS flow 1, a QoS flow 2, and a QoS flow 3, and the QoS flow 1, the QoS flow 2, and the QoS flow 3 all belong to a first PDU session.

In an implementation a1, the indication information a1 may include M pieces of association information respectively corresponding to the M QoS flows. For example, the indication information a1 may include association information corresponding to the QoS flow 1, association information corresponding to the QoS flow 2, and association information corresponding to the QoS flow 3. In this case, after receiving the indication information a1, if determining that the association information corresponding to the QoS flow 1, the association information corresponding to the QoS flow 2, and the association information corresponding to the QoS flow 3 are the same, the network device may determine that the QoS flow 1, the QoS flow 2, and the QoS flow 3 belong to a same synchronization QoS flow set.

It should be noted that when the indication information a1 includes association-relationship types respectively corresponding to the M QoS flows, and all the association-relationship types are a second type, the indication information a1 may further include transmission ratio information of the M QoS flows, for example, data ratio factors respectively corresponding to the M QoS flows. In another possible embodiment, the indication information a1 may alternatively not include the transmission ratio information of the M QoS flows. In this case, the transmission ratio information of the M QoS flows may be predefined in a protocol, or may be notified to the network device in another possible manner. This is not specifically limited.

In an implementation a2, the indication information a1 may include association information and/or an associated session indication corresponding to the first PDU session. In this case, after receiving the indication information a1, the network device may determine that the first PDU session is an associated session. To be specific, all QoS flows (for example, the M QoS flows) in the first PDU session belong to a same synchronization QoS flow set. (1) The associated session indication may indicate that the first PDU session is an associated session. For example, if the first PDU session corresponds to the associated session indication, it indicates that the first PDU session is an associated session. If the first PDU session does not correspond to the associated session indication, it indicates that the first PDU session is not an associated session. Alternatively, (2) a value of the associated session indication may indicate whether the first PDU session is a PDU session. For example, the value of the associated session indication is Boolean information. If the value of the associated session indication corresponding to the first PDU session is true (true), it indicates that the first PDU session is an associated session. If the value of the associated session indication corresponding to the first PDU session is false (false), it indicates that the first PDU session is not an associated session. For another example, if the value of the associated session indication is enumeration information, and the value of the associated session indication corresponding to the first PDU session is 1, it indicates that the first PDU session is an associated session. If the value of the associated session indication corresponding to the first PDU session is 0, it indicates that the first PDU session is not an associated session.

It should be noted that when the indication information a1 includes an association-relationship type corresponding to the first PDU session, and the association-relationship type is a second type, the indication information a1 may further include transmission ratio information of the M QoS flows in the first PDU session, for example, a data ratio of the M QoS flows. In another possible embodiment, the indication information a1 may alternatively not include the transmission ratio information of the M QoS flows. This is not specifically limited.

It may be understood that, in another possible example, another description may alternatively be used for the indication information a1. For example, a possible description is that the indication information a1 indicates a synchronization QoS flow set to which the QoS flows belong. For example, the indication information a1 may include at least one of the following: an association-relationship identifier, association-relationship type information, and an association-relationship indication. When the indication information a1 includes the association-relationship identifier, it may be understood that the indication information a1 indicates an identifier of the synchronization QoS flow set to which the QoS flows belong. When the indication information a1 includes the association-relationship type information, it may be understood that the indication information a1 indicates a type of the synchronization QoS flow set to which the QoS flows belong. When the indication information a1 includes the association-relationship indication, it may be understood that the indication information a1 indicates that all the QoS flows included in the PDU session belong to the same synchronization QoS flow set.

### 2. An implementation in which the SMF network element sends the indication information a1 to the network device is described.

There may be a plurality of implementations in which the SMF network element sends the indication information a1 to the network device. In a possible implementation, the SMF network element may send the indication information a1 to the network device by using a PDU session resource setup request message or a PDU session resource modification request (PDU session resource modification request) message. For example, a terminal device has a downlink service receiving requirement or an uplink service sending requirement. In this case, the terminal device initiates a PDU session resource setup request, and further triggers the SMF network element to send the PDU session resource setup request message to the network device. The PDU session resource setup request message may carry the indication information a1. For another example, a terminal device needs to modify a QoS flow in a set PDU session. In this case, the terminal device initiates a PDU session resource modification request, and further triggers the SMF network element to send the PDU session resource modification request message to the network device. The PDU session resource modification request message may carry the indication information a1. It may be understood that the SMF network element may alternatively send the indication information a1 to the network device by using another possible message. This is not specifically limited.

The following uses the PDU session resource setup request message as an example to describe some possible implementations in which the PDU session resource setup request message carries the indication information a1.

In an implementation b1 (which corresponds to the implementation a1), the PDU session resource setup request message may include a QoS flow setup request list (QoS Flow Setup Request List). The QoS flow setup request list may include one or more QoS flow setup request items (QoS Flow Setup Request Items) corresponding to a QoS flow. The QoS flow setup request items corresponding to the QoS flow include a QFI, QoS flow level QoS parameters (QoS Flow Level QoS Parameters), and an ID of an evolved radio access bearer (evolved radio access bearer, E-RAB). In this embodiment of this application, the QoS flow setup request items corresponding to the QoS flow may further include association information (namely, an association-relationship identifier and/or an association-relationship type) corresponding to the QoS flow. In other words, an information element (information element, IE) 1 and/or an information element 2 may be newly added to the QoS flow setup request items corresponding to the QoS flow. The information element 1 is used to carry the association-relationship identifier corresponding to the QoS flow, and the information element 2 is used to carry the association-relationship type corresponding to the QoS flow.

The following Table 1 to Table 3 are some examples in which the PDU session resource setup request message carries the indication information a1.

**Table 1: Example in which the PDU session resource setup request message carries the indication information a1**

| QoS Flow Setup Request List |
|---|
| >QoS Flow Setup Request Item |
| >>QFI |
| >>QoS Flow Level QoS Parameters |
| >>E-RAB ID |
| **>>Association ID (Information element 1)** |

As shown in Table 1, the information element 1 may be newly added to the QoS flow setup request items corresponding to the QoS flow.

**Table 2: Example in which the PDU session resource setup request message carries the indication information a1**

| QoS Flow Setup Request List |
|---|
| >QoS Flow Setup Request Item |
| >>QoS Flow Identifier |
| >>QoS Flow Level QoS Parameters |
| >>E-RAB ID |
| **>>Association type (Information element 2)** |

As shown in Table 2, the information element 2 may be newly added to the QoS flow setup request items corresponding to the QoS flow. As shown in Table 3, when the association-relationship type corresponding to the QoS flow is a second type, an information element (for example, an information element 3) may be further newly added to the QoS flow setup request items corresponding to the QoS flow, to carry a data ratio factor of the QoS flow.

**Table 3: Example in which the PDU session resource setup request message carries the indication information a1**

| QoS Flow Setup Request List |
|---|
| >QoS Flow Setup Request Item |
| >>QoS Flow Identifier |
| >>QoS Flow Level QoS Parameters |
| >>E-RAB ID |
| **>>Association ID (Information element 1)** |
| **>>Association type (Information element 2)** |
| **>>Data Ratio Factor (Information element 3)** |

It should be noted that, using a QoS flow 1 as an example, if the QoS flow 1 and another QoS flow belong to a synchronization QoS flow set, the information element 1 and/or the information element 2 (and the information element 3) may be newly added to a QoS flow setup request item corresponding to the QoS flow 1. If the QoS flow 1 does not belong to a synchronization QoS flow set with any other QoS flow, the information element 1 and the information element 2 (and the information element 3) may not be newly added to the QoS flow setup request item corresponding to the QoS flow 1.

In an implementation b2 (which corresponds to the implementation a2), the PDU session resource setup request includes a PDU session resource setup request item (PDU Session Resource Setup Request Item) corresponding to the PDU session. The PDU session resource setup request item corresponding to the PDU session may include a PDU session identifier (PDU Session ID), a PDU session non-access stratum PDU (PDU Session NAS-PDU), single network slice selection assistance information (single network slice selection assistance information, S-NSSAI), and PDU session resource setup request transfer (PDU Session Resource Setup Request Transfer). The PDU session resource setup request transfer may include a QoS flow setup request list. In this embodiment of this application, the PDU session resource setup request item corresponding to the PDU session may further include at least one of an associated session indication, an association-relationship identifier, and an association-relationship type. In other words, at least one of an information element 4, an information element 5, and an information element 6 may be newly added to the PDU session resource setup request item corresponding to the PDU session. The information element 4 is used to carry the associated session indication, the information element 5 is used to carry the association-relationship identifier corresponding to the PDU session, and the information element 6 is used to carry the association-relationship type corresponding to the PDU session.

The following Table 4 to Table 6 are some examples in which the PDU session resource setup request message carries the indication information a1.

**Table 4: Example in which the PDU session resource setup request message carries the indication information a1**

| **>PDU Session Resource Setup Request Item** |
|---|
| >>PDU Session ID |
| >>PDU Session NAS-PDU |
| >>S-NSSAI |
| >>PDU Session Resource Setup Request Transfer |
| **>>Associated Session (Information element 4)** |

As shown in Table 4, the information element 4 may be newly added to the PDU session resource setup request item corresponding to the PDU session.

**Table 5: Example in which the PDU session resource setup request message carries the indication information a1**

| **>PDU Session Resource Setup Request Item** |
|---|
| >>PDU Session ID |
| >>PDU Session NAS-PDU |
| >>S-NSSAI |
| >>PDU Session Resource Setup Request Transfer |
| **>>Association type (Information element 6)** |

As shown in Table 5, the information element 6 may be newly added to the PDU session resource setup request item corresponding to the PDU session.

**Table 6: Example in which the PDU session resource setup request message carries the indication information a1**

| **>PDU Session Resource Setup Request Item** |
|---|
| >>PDU Session ID |
| >>PDU Session NAS-PDU |
| >>S-NSSAI |
| >>PDU Session Resource Setup Request Transfer |
| **>>Associated Session (Information element 4)** |
| **>>Association type (Information element 6)** |
| **>>Data Ratio (Information element 7)** |

As shown in Table 6, the information element 4 and the information element 6 may be newly added to the PDU session resource setup request item corresponding to the PDU session. When the association-relationship type corresponding to the PDU session is a second type, an information element (for example, the information element 7) may be further newly added to the PDU session resource setup request item corresponding to the PDU session, to carry the data ratio.

Step 502: The network device performs admission control on the M QoS flows based on the indication information a1.

Herein, the network device may perform, based on the indication information a1, admission control of simultaneous admission or simultaneous rejection on QoS flows belonging to a same synchronization QoS flow set.

For example, if the PDU session resource setup request message carries the indication information a1, the network device may simultaneously admit setup requests of all the QoS flows in the synchronization QoS flow set based on the indication information a1, or simultaneously reject the setup requests of all the QoS flows in the synchronization QoS flow set based on the indication information a1. For example, the synchronization QoS flow set includes a QoS flow 1, a QoS flow 2, and a QoS flow 3. The network device may set up or not set up the QoS flow 1, the QoS flow 2, and the QoS flow 3. In other words, the network device does not set up only one or two of the QoS flow 1, the QoS flow 2, and the QoS flow 3. For another example, if the PDU session resource modification request message carries the indication information a1, the network device may simultaneously admit modification requests of all the QoS flows in the synchronization QoS flow set based on the indication information a1, or simultaneously reject the modification requests of all the QoS flows in the synchronization QoS flow set based on the indication information a1. For example, the synchronization QoS flow set includes a QoS flow 1, a QoS flow 2, and a QoS flow 3. The network device may modify or not modify the QoS flow 1, the QoS flow 2, and the QoS flow 3. That is, the network device does not modify only one or two of the QoS flow 1, the QoS flow 2, and the QoS flow 3.

For example, the network device admits the setup requests of all the QoS flows in the synchronization QoS flow set. The network device may further configure air interface resources for all the QoS flows in the synchronization QoS flow set. For example, in an example (which is referred to as an example 1), the network device may map different QoS flows in the same synchronization QoS flow set to different DRBs or different logical channels. In another example (which is referred to as an example 2), the network device may map different QoS flows in the same synchronization QoS flow set to a same DRB (where the DRB may correspond to one logical channel) or a same logical channel. It should be noted that if the indication information a1 includes the association-relationship type, when the association-relationship type is a first type or a second type, the foregoing example 1 may be used, and when the association-relationship type is a third type, the foregoing example 2 may be used.

For example, for the example 1, the network device may further configure, to different logical channel groups (for example, each logical channel group includes one logical channel), the different logical channels to which the different QoS flows in the synchronization QoS flow set are mapped, or define a new BSR format reported for each logical channel. Therefore, after the terminal device reports the B SR, the network device may determine a volume of to-be-transmitted uplink data of each QoS flow in the same synchronization QoS flow set, to implement differentiated scheduling.

In this embodiment of this application, the network device may perform admission control on the M QoS flows based on a plurality of bases. In an implementation, the network device may determine, based on information such as a current serving cell of the terminal device and a load status of the network device, whether the M QoS flows can be admitted. Further, the network device may further consider, based on information such as a capability and a coverage status of the terminal device, whether a QoS requirement of the M QoS flows can be satisfied by configuring more serving cells, adding a secondary base station, or the like, to further determine whether the M QoS flows can be admitted. In this case, in a process of performing admission control, the network device may trigger configuring a secondary carrier and/or a secondary base station for the terminal device. For a process in which the network device configures the secondary carrier and/or the secondary base station for the terminal device, refer to an existing solution. Details are not described herein.

It should be noted that, unless otherwise specified, the synchronization QoS flow set, the QoS flow, the DRB, or the logical channel in step 501 and step 502 is applicable to both an uplink direction and a downlink direction. However, during specific implementation, the synchronization QoS flow set, the QoS flow, the DRB, or the logical channel may be only for the uplink direction or the downlink direction, or may be for both the uplink direction and the downlink direction.

Step 503: The network device sends a response message to the SMF network element by using the AMF network element.

In an example, in step 501, if the SMF network element sends the indication information a1 to the network device by using the PDU session resource setup request message, the response message herein may be a PDU session resource setup response (PDU session resource setup response) message. The PDU session resource setup response message may include a QoS flow failed to setup list. The QoS flow failed to setup list includes an identifier of a QoS flow rejected by the network device for setup. Alternatively, the PDU session resource setup response message may include an identifier of a synchronization QoS flow set rejected by the network device for setup.

In another example, in step 501, if the SMF network element sends the indication information a1 to the network device by using the PDU session resource modification request message, the response message herein may be a PDU session resource modification response (PDU session resource modification response) message. The PDU session resource modification response message may include a QoS flow failed to modify list. The QoS flow failed to modify list includes an identifier of a QoS flow rejected by the network device for modification. Alternatively, the PDU session resource modification response message may include an identifier of a synchronization QoS flow set rejected by the network device for modification.

Step 504: The network device sends indication information a2 to the terminal device; and correspondingly, the terminal device receives the indication information a2.

For example, the indication information a2 may include indication information a2' and/or indication information a2".
(1) The indication information a2' indicates that there is the association relationship between the M QoS flows. For example, the SMF network element may send a PDU session establishment accept (PDU session establishment accept) message or a PDU session modification accept (PDU session modification accept) message to the terminal device by using the AMF network element and the network device. The PDU session establishment accept message or the PDU session modification accept message may include configuration information of the M QoS flows, for example, a TFT and a QoS parameter corresponding to each QoS flow. Optionally, the PDU session establishment accept message or the PDU session modification accept message may further include the indication information a2'. For a manner in which the PDU session establishment accept message or the PDU session modification accept message includes the indication information a2', adaptively refer to the descriptions of the indication information a1. For example, the configuration information of each QoS flow may include an association-relationship identifier and/or an association-relationship type corresponding to the QoS flow.
   For example, the PDU session establishment accept message or the PDU session modification accept message is a non-access stratum message, and the AMF network element and the network device are configured to transparently transmit the PDU session establishment accept message or the PDU session modification accept message. In this embodiment of this application, the transparent transmission behavior may also be referred to as: The AMF network element or the network device sends the PDU session establishment accept message or the PDU session modification accept message to the terminal device.
(2) The indication information a2" indicates that there is an association relationship between DRBs or LCHs corresponding to the M QoS flows. For example, the network device may send an RRC reconfiguration (RRC reconfiguration) message to the terminal device. The RRC reconfiguration message may include configuration information of one or more DRBs or LCHs, and mapping relationships from the M QoS flows to the DRBs and from the DRBs to the LCHs. Optionally, the RRC reconfiguration message may further include the indication information a2". In an example, for an implementation in which the indication information a2" indicates that there is the association relationship between the DRBs or the LCHs corresponding to the M QoS flows, adaptively refer to the descriptions of the indication information a1. For example, the M QoS flows correspond to M DRBs, and configuration information of each of the M DRBs may include an association-relationship identifier and/or an association-relationship type corresponding to the DRB.

Step 505: The terminal device sends a response message to the network device.

For example, in step 504, the network device sends the indication information a2" to the terminal device by using the RRC reconfiguration message. In this case, the response message herein may be an RRC reconfiguration complete (RRC reconfiguration complete) message.

Step 506: The network device processes data packets (relating to downlink transmission) in the M QoS flows based on the indication information a1.

For example, the network device may determine bursts to which the data packets in the M QoS flows belong; and further process a data packet in the M QoS flows that belongs to a first burst. After processing the data packet that belongs to the first burst, the network device processes a data packet in the M QoS flows that belongs to a second burst. In other words, for a plurality of QoS flows in a synchronization QoS flow set, the network device may sequentially process data packets that in the plurality of QoS flows and that belong to different bursts. When processing the data packets in the M QoS flows, the network device performs processing by using a burst as a unit, and does not perform processing across bursts. For example, air interface transmission in a next burst starts only after air interface transmission in a burst ends. This manner helps implement that data packets in a same burst synchronously arrive at a receive end within a time interval. This effectively avoids a problem that after a part of data packets in the first burst are transmitted, a part of data packets in the second burst are transmitted, and then a remaining part of the data packets in the first burst are transmitted, resulting in a large delay (namely, asynchronization) for the data packets in the same burst to arrive at the receive end.
1. A manner in which the network device determines the bursts to which the data packets in the M QoS flows belong is described.

In this embodiment of this application, the network device may determine, in a plurality of manners, the bursts to which the data packets in the M QoS flows belong. The following describes several possible implementations.

In an implementation c1, the network device may determine, based on burst identifier information of the data packets in the M QoS flows, the bursts to which the data packets in the M QoS flows belong. For example, an N3 GTP-U (where GTP-U is one of protocols of a general packet radio service (general packet radio service, GPRS) tunnel protocol (GPRS tunnel protocol, GTP)) header of a data packet may carry the burst identifier information. The burst identifier information indicates a burst to which the data packet belongs. For example, the N3 GTP-U header may include a two-bit field, and four different values of the field respectively represent different bursts. For example, if a value of the field in an N3 GTP-U header of a data packet is 00, it indicates that a burst to which the data packet belongs is a burst 1. If the value of the field in the N3 GTP-U header of the data packet is 01, it indicates that a burst to which the data packet belongs is a burst 2. If the value of the field in the N3 GTP-U header of the data packet is 10, it indicates that a burst to which the data packet belongs is a burst 3. If the value of the field in the N3 GTP-U header of the data packet is 11, it indicates that a burst to which the data packet belongs is a burst 4. Further, after receiving, from an N3 tunnel, two consecutive data packets in the M QoS flows, the network device may read values of the foregoing fields in N3 GTP-U headers of the two consecutive data packets, to determine whether the two consecutive data packets belong to a same burst.

In an implementation c2, the network device may determine, based on payload information of the data packets, the bursts to which the data packets in the M QoS flows belong. For example, the payload information of a data packet may be all or a part of the payload information of the data packet. For example, after receiving, from an N3 tunnel, two consecutive data packets in the M QoS flows, the network device may determine, through comparison, whether the 41^{st} bits of payload of the two consecutive data packets are the same. If the bits are the same, the two consecutive data packets belong to a same burst. If the bits are different, the two consecutive data packets belong to different bursts.

In an implementation c3, the network device may determine, based on a distinguishing identifier between different bursts, the bursts to which the data packets in the M QoS flows belong. For example, the distinguishing identifier between the different bursts may be a special data packet, and the special data packet may be an end mark (end mark) of a burst. For example, after receiving the special data packet from an N3 tunnel, the network device may determine that at least one data packet transmitted before the special data packet belongs to a burst 1, and at least one data packet transmitted after the special data packet belongs to a burst 2. For example, the special data packet may be added after the UPF network element identifies a burst boundary, or may be added by an application server. This is not specifically limited.

In an implementation c4, the network device may determine, based on a transmission time interval (refer to FIG. 4) between data packets of different bursts, the bursts to which the data packets in the M QoS flows belong. The transmission time interval may be predefined in a protocol, or may be indicated by the core network device or the terminal device to the network device. This is not specifically limited.

It should be noted that a manner in the foregoing implementation c1 to the implementation c4 that is specifically used may be notified by a core network, a network management system, the application server, or the terminal device to the network device, or may be predefined in a protocol. It may be understood that the burst identification manner described above may be implemented independently.

2. A manner in which the network device processes the data packet in the M QoS flows that belongs to the first burst is described.

In this embodiment of this application, that the network device processes the data packet in the M QoS flows that belongs to the first burst may include: The network device transmits, to the terminal device, the data packet in the M QoS flows that belongs to the first burst, and/or the network device discards a data packet in the M QoS flows that belongs to the first burst and that has not been transmitted.
(1) The network device may transmit, in a plurality of manners, the data packet in the M QoS flows that belongs to the first burst. Several possible implementations are described herein. In an implementation d1, the network device transmits, based on priorities of the M QoS flows, the data packet in the M QoS flows that belongs to the first burst. In an implementation d2, the network device transmits, based on transmission ratio information of the M QoS flows, the data packet in the M QoS flows that belongs to the first burst. In an implementation d3, the network device transmits, in a first in first service manner, the data packet in the M QoS flows that belongs to the first burst.
   It should be noted that if the indication information a1 includes the association-relationship type, when the association-relationship type is a first type, the implementation d1 may be used. When the association-relationship type is a second type, the implementation d2 may be used. When the association-relationship type is a third type, the implementation d3 may be used.
(2) That the network device discards a data packet in the M QoS flows that belongs to the first burst and that has not been transmitted may be that when determining that an air interface transmission deadline of the first burst is reached, the network device may discard the data packet in the M QoS flows that belongs to the first burst and that has not been transmitted to the terminal device. Alternatively, when determining that the data packet that belongs to the first burst exceeds a transmission delay requirement, the network device may discard the data packet in the M QoS flows that belongs to the first burst and that has not been transmitted to the terminal device. For example, the network device may determine, based on a PDB and/or a frame spread delay (frame spread delay, FSD) of the data packet, whether the data packet exceeds the transmission delay requirement. The PDB defines an upper limit of a delay of data packet transmission between the terminal device and the UPF network element, and a value of the PDB may be the same in an uplink and a downlink. The FSD represents a maximum delay that is acceptable after the 1^{st} data packet of a burst arrives at a receive end and when another data packet of the same burst arrives at the receive end. The network device may obtain, from the core network device or the terminal device, an FSD of the PDU session or the QoS flow. For example, the PDU session resource setup request message sent by the SMF network element or the AMF network element to the network device may include the FSD of the PDU session or the QoS flow. It may be understood that when the network device determines whether a per-burst data packet exceeds the transmission delay requirement, an FSD of an air interface segment is considered. Therefore, the FSD used by the network device to determine whether the per-burst data packet exceeds the transmission delay requirement may be less than an FSD specified at an application layer.

It can be learned from the foregoing content that, that the air interface transmission in the first burst ends may mean that all the data packets in the first burst are transmitted on the air interface, or a final time limit of the air interface transmission in the first burst is reached.

It should be noted that: (1) The foregoing descriptions are provided by using an example in which the network device processes the data packet in the M QoS flows that belongs to the first burst. The network device may process, in a same manner, a data packet in the M QoS flows that belongs to another burst (for example, the second burst). (2) In another possible embodiment, when determining that the final time limit of the air interface transmission in the first burst is reached or that the data packet belonging to the first burst exceeds the transmission delay requirement, the network device may alternatively not discard the data packet in the M QoS flows that belongs to the first burst and that has not been transmitted. For example, the network device may reduce a priority that is of the data packet and that is for participating in subsequent air interface transmission.

For step 506, in another possible embodiment, that the network device processes data packets in the M QoS flows based on the indication information a1 may alternatively mean that the network device transmits and/or discards the data packets in the M QoS flows based on the priorities of the M QoS flows; the network device transmits and/or discards the data packets in the M QoS flows based on the transmission ratio information of the M QoS flows; or the network device transmits the data packets in the M QoS flows in the first in first service manner. A difference between this processing manner and the processing manner described above lies in that, in the processing manner described above, processing is performed by using the burst as a unit, but in this processing manner, the burst may not be considered. For other content other than the difference, refer to the foregoing descriptions.

Step 507: The terminal device processes the data packets (relating to uplink transmission) in the M QoS flows based on the indication information a2.

For example, for a specific implementation in which the terminal device processes the data packets in the M QoS flows, adaptively refer to the descriptions of processing the data packets in the M QoS flows by the network device. A difference between the two lies in that the terminal device needs to receive an uplink grant from the network device, and then schedules, based on the indication information a2, air interface transmission of the data packets in the M QoS flows. For example, the terminal device may transmit, based on the priorities of the M QoS flows and on a resource indicated by the uplink grant, the data packet in the M QoS flows that belongs to the first burst. Alternatively, the terminal device may transmit, based on the transmission ratio information of the M QoS flows and on a resource indicated by the uplink grant, the data packet in the M QoS flows that belongs to the first burst. Alternatively, the terminal device may transmit, in the first in first service manner and on a resource indicated by the uplink grant, the data packet in the M QoS flows that belongs to the first burst.

It should be noted that (1) "scheduling" of the terminal device may be re-allocating, between different logical channels by the terminal device, an uplink resource allocated to the terminal device. From a perspective of the terminal device, after the terminal device receives an uplink resource (which may be a resource that can be dynamically scheduled or pre-configured for scheduling) that can be used for data transmission, if inappropriate data is placed on the uplink resource (in other words, the data is placed on an inappropriate resource), a data requirement may not be satisfied, or efficiency of a communication system may be reduced. Therefore, to place appropriate data on an appropriate resource, the terminal device may select, for the uplink resource, data on an appropriate logical channel. For example, "the terminal device transmits, based on the priorities of the M QoS flows and on the uplink resource, the data packet in the M QoS flows that belongs to the first burst" described above is a scheduling manner of the terminal device. In addition, for related implementation of the process, refer to a logical channel prioritization (logical channel prioritization) process in 3GPP TS 38.321 v15.4.0.

(2) A burst identification manner specifically used by the terminal device may be indicated by a higher layer (for example, an application layer) of the terminal device or the core network device. The higher layer of the terminal device may indicate the burst identification manner by notifying the burst identification manner by using control plane signaling, or may indicate, by using corresponding indication information when the higher layer delivers each uplink data packet to an access stratum, whether the data packet and a previous data packet belong to a same burst. For the burst identification manner indicated by the core network device, refer to descriptions of a network device side.

In addition, in this embodiment of this application, (1) if the network device configures, to different logical channel groups, different logical channels to which the M QoS flows are mapped, the terminal device may report a BSR for each logical channel group. If the network defines a new BSR format reported for each logical channel, the terminal device may report, for each logical channel to which the M QoS flows are mapped, a BSR by using the new BSR format. It should be noted that the terminal device may report the BSR by using the burst as a unit, so that the network device can schedule, for each burst based on the priorities or the transmission ratio information of the QoS flows, air interface transmission of the data packets in the M QoS flows. Alternatively, (2) if the network device configures, to a same logical channel group, the different logical channels to which the M QoS flows are mapped, the terminal device may report a BSR for the logical channel group.

For example, the BSR reported by the terminal device may include information such as the association-relationship identifier, the association-relationship type, or an identifier of a PDU session to which the M QoS flows belong.

It should be noted that the procedure described in step 501 to step 507 is merely a possible procedure example. During specific implementation, adaptive adjustment may be performed based on the foregoing described procedure. For example, the network device may perform admission control on the M QoS flows based on the indication information a1, and does not process the data packets in the M QoS flows based on the indication information a1. In this case, for implementation of processing the data packets in the M QoS flows by the network device, refer to a conventional technology. For another example, the network device may process the data packets in the M QoS flows based on the indication information a1, and does not perform admission control on the M QoS flows based on the indication information a1. In this case, for implementation of performing admission control on the M QoS flows by the network device, refer to a conventional technology.

It can be learned from the content in Embodiment 1 that the network device may receive the indication information a1 from the core network device, and then perform admission control on the M QoS flows and/or process the data packets in the M QoS flows based on the indication information a1, to help satisfy a synchronization requirement between different data flows. For example, in the example described above, if the IVAS supports five sound channels, and the data flows of the five sound channels are respectively mapped to the QoS flow 1, the QoS flow 2, the QoS flow 3, the QoS flow 4, and the QoS flow 5 of the same PDU session, the method in this embodiment of this application is used, an association relationship may be set among the QoS flow 1, the QoS flow 2, the QoS flow 3, the QoS flow 4, and the QoS flow, so that the network device may simultaneously admit the QoS flow 1, the QoS flow 2, the QoS flow 3, the QoS flow 4, and the QoS flow. That only a part of the QoS flows are admitted is avoided, so that a synchronization requirement between the different sound channels is satisfied, and user experience is improved. For another example, for a multimedia service in which a video, audio, and a text coexist, when the method in this embodiment of this application is used, a network problem that affects user experience, for example, that there is a video but no sound, can be effectively avoided.

In addition, different QoS flows in the synchronization QoS flow set are mapped to different DRBs or logical channels, so that differentiated air interface scheduling can be implemented, and data transmission of a QoS flow with a high priority can be preferentially ensured. Air interface scheduling is performed based on the burst, and a frame extension delay is introduced, so that cross-frame delay accumulation can be effectively avoided, and service experience is ensured.

### Embodiment 2

In Embodiment 2, an example in which the method in embodiments of this application is applicable to a dual connectivity scenario is used for description.

In the dual connectivity scenario, a terminal device may be simultaneously connected to two network devices. One of the two network devices is a primary network device, and the other network device is a secondary network device. In this case, the primary network device may receive, from a core network device, the indication information indicating that there is the association relationship between the M QoS flows, and the secondary network device may receive, from the primary network device, the indication information indicating that there is the association relationship between the M QoS flows.

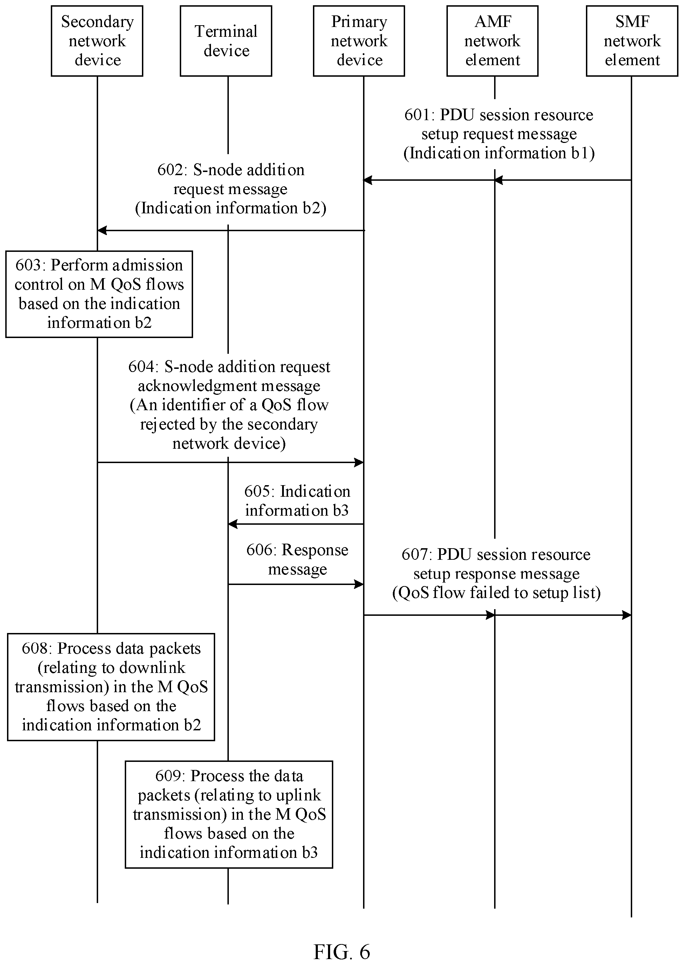

FIG. 6 is a schematic flowchart corresponding to a communication method according to Embodiment 2 of this application. As shown in FIG. 6, the method includes the following steps.

Step 601: An SMF network element sends indication information b1 to a primary network device by using an AMF network element. Correspondingly, the primary network device may receive the indication information b1.

For example, the indication information b1 indicates that there is the association relationship between the M QoS flows. For a specific implementation of the indication information b1, refer to the indication information a1 in Embodiment 1.

Step 602: The primary network device sends the indication information b2 to a secondary network device. Correspondingly, the secondary network device may receive the indication information b2.

For example, the indication information b1 is carried in a PDU session resource setup request message or a PDU session resource modification request message. After the primary network device receives the PDU session resource setup request message or the PDU session resource modification request message, when the primary network device determines, based on PDU session configuration information and the indication information b1 in the PDU session resource setup request message or the PDU session resource modification request message, that the primary network device cannot perform admission but there is a secondary network device that provides a service and the secondary network device may perform admission, or that the primary network device can perform admission but wants to query, based on consideration such as load balancing, whether a secondary network device can perform admission, the primary network device may trigger a secondary base station addition process. To be specific, the primary network device sends an s-node addition request (S-node addition request) message to a secondary base station, where the s-node addition request message may include the PDU session configuration information and the indication information b2. Functions and implementations of the indication information b2 and the indication information b1 may be the same.

It should be noted that the foregoing is described by using an example in which the primary network device triggers the secondary base station addition process. In another possible embodiment, if a secondary network device has been configured for the terminal device, the primary network device may alternatively trigger a secondary base station modification process. To be specific, the primary network device sends an s-node modification request (S-node modification request) message to the secondary network device, where the s-node modification request message may include the PDU session configuration information and the indication information b2.

It may be understood that the indication information b2 may be carried in the s-node addition request message or the s-node modification request message, or may be carried in another possible message. This is not specifically limited.

Step 603: The secondary network device performs admission control on the M QoS flows based on the indication information b2.

Herein, for an implementation in which the secondary network device performs admission control on the M QoS flows based on the indication information b2, refer to step 502 in Embodiment 1. Details are not described again.

Step 604: The secondary network device sends a response message to the primary network device. Correspondingly, the primary network device receives the response message.

Herein, the response message may include information about whether each QoS flow is admitted. For example, the response message may include an identifier of a QoS flow rejected by the secondary network device or an identifier of a synchronization QoS flow set rejected by the secondary network device.

For example, if the primary network device sends the indication information b2 to the secondary network device by using the s-node addition request message in step 602, the response message herein may be an s-node addition request acknowledgment (S-node addition request acknowledgment) message. If the primary network device sends the indication information b2 to the secondary network device by using the s-node modification request message in step 602, the response message herein may be an s-node modification request acknowledgment (S-node modification request acknowledgment) message.

Step 605: The primary network device sends indication information b3 to the terminal device.

For example, the indication information b3 may include indication information b3' and/or indication information b3".
(1) The indication information b3' indicates that there is the association relationship between the M QoS flows. For example, the SMF network element may send a PDU session establishment accept message or a PDU session modification accept message to the terminal device by using the AMF network element and the primary network device. The PDU session establishment accept message or the PDU session modification accept message carries the indication information b3'. For a manner in which the PDU session establishment accept message or the PDU session modification accept message carries the indication information b3', refer to a2' in Embodiment 1.
(2) The indication information b3" indicates that there is an association relationship between DRBs or LCHs corresponding to the M QoS flows. For example, the primary network device may obtain configuration information of the secondary base station, and further send the configuration information of the secondary base station to the terminal device by using an RRC reconfiguration message. The configuration information of the secondary base station may include configuration information of one or more DRBs or LCHs, and a mapping relationship from the M QoS flows to the DRBs and a mapping relationship from the DRBs to the LCHs. For an implementation in which the indication information b3" indicates that there is the association relationship between the DRBs or the LCHs corresponding to the M QoS flows, refer to a3" in Embodiment 1.

Step 606: The terminal device sends a response message to the primary network device.

For example, in step 605, the primary network device sends the indication information b3" to the terminal device by using the RRC reconfiguration message. In this case, the response message b1 herein may be an RRC reconfiguration complete message.

Step 607: The primary network device sends a response message to the SMF network element by using the AMF network element.

In an example, in step 601, if the SMF network element sends the indication information b1 to the network device by using the PDU session resource setup request message, the response message b2 herein may be a PDU session resource setup response message. The PDU session resource setup response message may include a QoS flow failed to setup list. The QoS flow failed to setup list includes an identifier of a QoS flow rejected by the secondary network device for setup. Alternatively, the PDU session resource setup response message may include an identifier of a synchronization QoS flow set rejected by the secondary network device for setup.

In another example, in step 601, if the SMF network element sends the indication information b1 to the network device by using the PDU session resource modification request message, the response message b2 herein may be a PDU session resource modification response message. The PDU session resource modification response message may include a QoS flow failed to modify list. The QoS flow failed to modify list includes an identifier of a QoS flow rejected by the secondary network device for modification. Alternatively, the PDU session resource modification response message may include an identifier of a synchronization QoS flow set rejected by the secondary network device for modification.

Step 608: The secondary network device processes data packets (relating to downlink transmission) in the M QoS flows based on the indication information b2.

Herein, if the primary network device triggers the secondary base station addition process in step 602, a procedure in which the terminal device accesses the secondary network device may be further included before step 608. For example, the terminal device may access the secondary network device based on a dedicated preamble and/or a physical random access channel (physical random access channel, PRACH) resource configured by the secondary network device.

For example, for a specific implementation of step 608, refer to step 506 in Embodiment 1.

Step 609: The terminal device processes the data packets (relating to uplink transmission) in the M QoS flows based on the indication information b3.

For example, for a specific implementation of step 609, refer to step 507 in Embodiment 1.

It can be learned from the content in Embodiment 2 that, after determining, based on the message sent by the core network device, that there is the association relationship between the M QoS flows, the primary network device may indicate, to the secondary network device, that there is the association relationship between the M QoS flows, so that the secondary network device can perform admission control on the M QoS flows and/or process the data packets in the M QoS flows based on the association relationship between the M QoS flows, to help satisfy a synchronization requirement between different data flows.

### Embodiment 3

In Embodiment 3, an example in which the method in embodiments of this application is applicable to a handover scenario is used for description.

For example, the handover scenario may include a plurality of possible handover cases. For example, in a case 1, a terminal device is handed over from a cell of the network device to another cell of the network device. In a case 2, a terminal device is handed over from a cell of a first network device to a cell of a second network device. In the case 2, the first network device may be a source network device, the second network device may be a target network device. The source network device and the target network device may be network devices of a same AMF network element, or may be network devices of different AMF network elements.

In the case 1, the network device may receive, from a core network device, the indication information indicating that there is the association relationship between the M QoS flows. In the case 2, the source network device may receive, from a core network device, the indication information indicating that there is the association relationship between the M QoS flows, and the target network device may receive, from the source network device, the indication information indicating that there is the association relationship between the M QoS flows. The following describes the case 2.

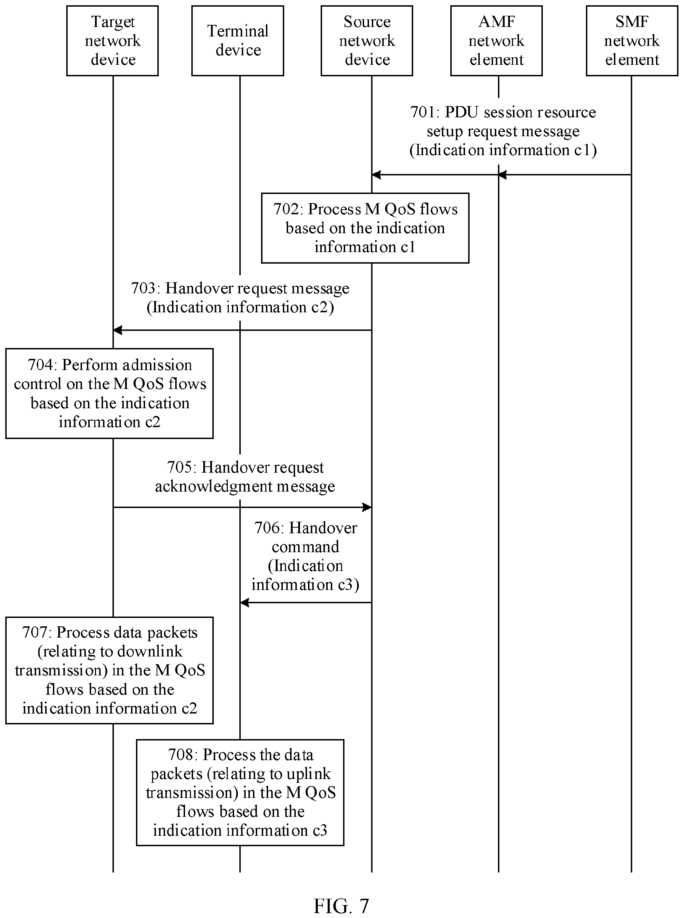

FIG. 7 is a schematic flowchart corresponding to a communication method according to Embodiment 3 of this application. As shown in FIG. 7, the method includes the following steps.

Step 701: An SMF network element sends indication information c1 to a source network device by using an AMF network element. Correspondingly, the source network device may receive the indication information c 1.

For example, the indication information c1 indicates that there is the association relationship between the M QoS flows. For a specific implementation of the indication information c1, refer to the indication information a1 in Embodiment 1.

Step 702: The source network device processes the M QoS flows based on the indication information c1.

For example, the source network device may perform admission control on the M QoS flows based on the indication information c1, and/or process data packets in the M QoS flows based on the indication information c1. For a specific implementation, refer to the descriptions in Embodiment 1.

Step 703: The source network device sends a handover request (handover request) message to a target network device. Correspondingly, the target network device may receive the handover request message.

For example, after determining that the terminal device needs to be handed over to the target network device, the source network device may send the handover request message to the target network device. The handover request message includes configuration information of the M QoS flows and indication information c2. Functions and implementations of the indication information c2 and the indication information c1 may be the same.

Step 704: The target network device performs admission control on the M QoS flows based on the indication information c2.

Herein, for an implementation in which the target network device performs admission control on the M QoS flows based on the indication information c2, refer to step 502 in Embodiment 1. Details are not described again.

Step 705: The target network device sends a handover request acknowledgment (handover request acknowledgment) message to the source network device. Correspondingly, the source network device receives the handover request acknowledgment message.

Herein, the handover request acknowledgment message may include information about whether each QoS flow is admitted. For example, the handover request acknowledgment message may include an identifier of a QoS flow rejected by the target network device or an identifier of a synchronization QoS flow set rejected by the target network device.

Step 706: The source network device sends, to the terminal device, an RRC reconfiguration message that includes a handover command. Correspondingly, the terminal device receives the RRC reconfiguration message, and performs corresponding configuration based on the RRC reconfiguration message.

Herein, the handover command may include configuration information of one or more DRBs or LCHs, and a mapping relationship from the M QoS flows to the DRBs and a mapping relationship from the DRBs to the LCHs. Optionally, the handover command may further include indication information c3. The indication information c3 indicates that there is an association relationship between DRBs or LCHs corresponding to the M QoS flows.

Step 707: The target network device processes the data packets (relating to downlink transmission) in the M QoS flows based on the indication information c2.

For example, for a specific implementation of step 707, refer to step 506 in Embodiment 1.

It should be noted that a procedure in which the terminal device accesses the target network device may be further included before step 707.

Step 708: The terminal device processes the data packets (relating to uplink transmission) in the M QoS flows based on the indication information c3.

For example, for a specific implementation of step 708, refer to step 507 in Embodiment 1.

It should be noted that the procedure described in step 701 to step 708 shows only some possible steps, and during specific implementation, another possible step may be further included.

It can be learned from the content in Embodiment 3 that, after determining, based on the message sent by the core network device, that there is the association relationship between the M QoS flows, the source network device may indicate, to the target network device, that there is the association relationship between the M QoS flows, so that the target network device can perform admission control on the M QoS flows and/or process the data packets in the M QoS flows based on the association relationship between the M QoS flows, to help satisfy a synchronization requirement between different data flows.

### Embodiment 4

The foregoing Embodiment 1 to Embodiment 3 separately describe, with reference to different scenarios, the manners in which the network device obtains the indication information indicating that there is the association relationship between the M QoS flows. It should be noted that, in the scenarios described in Embodiment 1 to Embodiment 3, the network device may alternatively obtain, in another manner, the indication information indicating that there is the association relationship between the M QoS flows. For example, the network device may alternatively obtain, from the terminal device, the indication information indicating that there is the association relationship between the M QoS flows.

For example, the communication method provided in Embodiment 4 of this application may include: A terminal device sends indication information d1 to the network device. For example, the indication information d1 indicates that there is the association relationship between the M QoS flows. Correspondingly, the network device receives the indication information d1, and further processes the M QoS flows based on the indication information d1. The network device herein may be the network device in Embodiment 1, may be the primary network device or the secondary network device in Embodiment 2, or may be the source network device or the target network device in Embodiment 3.

In an example, the terminal device may send the indication information d1 to the network device by using an assistance information (UE assistance INFO) message of the terminal device. The indication information d1 may include at least one of the following:
(1) Identifiers of one or more PDU sessions (or associated sessions), indicating that all QoS flows included in each of the PDU sessions belong to a same synchronization QoS flow set. For example, the identifiers of the one or more PDU sessions include an identifier of a first PDU session, and the first PDU session includes the M QoS flows.
(2) Identifiers (QFIs) of a plurality of QoS flows, indicating that there is an association relationship between the plurality of QoS flows. For example, the plurality of QoS flows are the M QoS flows.
(3) Identifiers of logical channels corresponding to a plurality of QoS flows, indicating that there is an association relationship between the logical channels corresponding to the plurality of QoS flows, and implicitly indicating that there is an association relationship between the plurality of QoS flows.
(4) Identifiers of DRBs corresponding to a plurality of QoS flows, indicating that there is an association relationship between the DRBs corresponding to the plurality of QoS flows, and implicitly indicating that there is an association relationship between the plurality of QoS flows.
(5) A plurality of TFTs, where there is an association relationship between QoS flows respectively matching the plurality of TFTs. Each of the plurality of TFTs may correspond to one QoS flow, and is used to filter the QoS flow. For example, the plurality of TFTs are M TFTs, and the M TFTs correspond to the M QoS flows.
(6) Synchronization indication information. The synchronization indication information may include at least one of an association-relationship identifier, an association-relationship type, and an association-relationship indication.

For example, the indication information d1 may include {an identifier of a PDU session+a plurality of QFIs}, indicating that a plurality of specified QoS flows in the PDU session belong to a same synchronization QoS flow set.

For another example, the indication information d1 may include {synchronization indication information+identifiers of one or more PDU sessions}, indicating that all QoS flows included in each of the PDU sessions belong to a same synchronization QoS flow set.

For another example, the indication information d1 may include {one or more {a PDU session ID+a plurality of QFIs} }, indicating that specified QoS flows in one or more PDU sessions belong to a same synchronization QoS flow set.

It should be noted that: (1) When the indication information d1 includes (3) and/or (4), this manner is applicable to a scenario in which a PDU session has been established. In this case, the network device may process the data packets in the M QoS flows based on the indication information d1, and does not perform admission control on the M QoS flows based on the indication information d1.

(2) When the indication information d1 includes at least one of (1), (2), (5), and (6), the terminal device may send a non-access stratum message (where the non-access stratum message includes the indication information d1) to the network device, and the network device sends the non-access stratum message to the core network device (for example, the AMF network element or the SMF network element), so that the core network device may determine, based on the indication information d1, that there is the association relationship between the M QoS flows, and may indicate, to the network device through a PDU session establishment or modification process, that there is the association relationship between the M QoS flows. In this case, the terminal device may determine, based on an application layer message sent by an application server, that there is the association relationship between the M QoS flows, and further send the non-access stratum message to the network device.

In Embodiment 1 to Embodiment 4, a network device (for example, the network device in Embodiment 1, the primary network device or the secondary network device in Embodiment 2, or the source network device or the target network device in Embodiment 3) is described as an entire device. In some possible cases, the network device may alternatively include separate nodes. For example, refer to FIG. 2b and FIG. 2c.

Based on the network devices shown in FIG. 2b and FIG. 2c, the following describes interaction between different nodes included in the network device with reference to Embodiment 5 and Embodiment 6.

### Embodiment 5

In Embodiment 5, a possible implementation is described by using an example in which the network device is the network device shown in FIG. 2b (that is, the network device may include a CU and a DU).

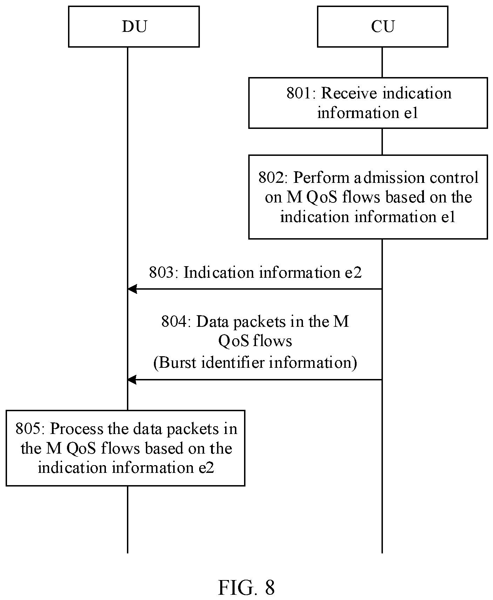

FIG. 8 is a schematic flowchart corresponding to a communication method according to Embodiment 5 of this application. As shown in FIG. 8, the method includes the following steps.

Step 801: A CU receives indication information e 1.

Herein, the indication information e1 may indicate that there is the association relationship between the M QoS flows. The CU may receive the indication information e1 in a plurality of manners. For example, the CU may receive the indication information e1 from an SMF network element or an AMF network element. For a specific implementation, refer to related descriptions of receiving the indication information a1 by the network device in Embodiment 1.

Step 802: The CU performs admission control on the M QoS flows based on the indication information e1.

Herein, the CU may perform, based on the indication information e1, admission control of simultaneous admission or simultaneous rejection on QoS flows belonging to a same synchronization QoS flow set.

Step 803: The CU sends indication information e2 to a DU. Correspondingly, the DU may receive the indication information e2.

For example, the CU may determine DRBs or LCHs corresponding to the M QoS flows, and send the indication information e2 to the DU. The indication information e2 indicates that there is an association relationship between the DRBs or the LCHs corresponding to the M QoS flows. In an example, the indication information e2 may include at least one of an association-relationship identifier, an association-relationship type, and an association-relationship indication.

In an alternative solution, the CU may indicate, in a DRB configuration and for each of the M QoS flows, a synchronization QoS set to which the QoS flow belongs, instead of directly indicating that there is the association relationship between the DRBs corresponding to the M QoS flows. In this way, the DU may determine the association relationship between the DRBs based on the association relationship between the QoS flows.

Step 804: The CU sends data packets in the M QoS flows to the DU.

For example, after receiving, from a UPF network element, the data packets in the M QoS flows, the CU may send the data packets in the M QoS flows to the DU. Further, the CU may further indicate, to the DU, bursts to which the data packets in the M QoS flows belong. For example, the CU may indicate, to the DU by using an F1 GTP-U header of the data packets, the bursts to which the data packets belong. To be specific, the F1 GTP-U header of the data packet may include burst identifier information. For example, the F1 GTP-U header may include a two-bit field, and four different values of the field respectively represent different bursts.

In another possible embodiment, the DU may alternatively determine, based on load information of the data packets (refer to the foregoing implementation c2), a distinguishing identifier between different data packets (refer to the foregoing implementation c3), or a transmission time interval between data packets of different bursts (refer to the foregoing implementation c4), the bursts to which the data packets in the M QoS flows belong. For example, the CU may indicate, to the DU, a specifically used burst identification manner, and then the DU determines, in the burst identification manner indicated by the CU, the bursts to which the data packets in the M QoS flows belong. Alternatively, the burst identification manner is predefined in a protocol.

Step 805: The DU processes the data packets in the M QoS flows based on the indication information e2.

For example, the DU may process, based on the bursts to which the data packets in the M QoS flows belong, a data packet in the M QoS flows that belongs to a first burst. After processing the data packet that belongs to the first burst, the DU processes a data packet in the M QoS flows that belongs to a second burst.

That the DU processes the data packet in the M QoS flows that belongs to the first burst may include: The DU transmits, to the terminal device, the data packet in the M QoS flows that belongs to the first burst. For a specific implementation, refer to the descriptions of transmitting, by the network device to the terminal device, the data packet in the M QoS flows that belongs to the first burst in Embodiment 1.

Optionally, that the DU processes the data packet in the M QoS flows that belongs to the first burst may alternatively include: The DU sends discarding indication information of the corresponding DRBs or the corresponding logical channels to the CU. The discarding indication information includes identifier information of the first burst. Correspondingly, after receiving the discarding indication information, the CU may discard a data packet that is in the corresponding DRBs or the corresponding logical channels, that belongs to the first burst, and that has not been transmitted to the terminal device. Herein, the DRB or the logical channel corresponding to the discarding indication information may be understood as a DRB or a logical channel corresponding to the M QoS flows. In an example, the DU may send the discarding indication information to the CU by using control plane signaling. The discarding indication information may include an ID of the corresponding DRB or an ID of the corresponding logical channel. In another example, the DU may send the discarding indication information to the CU by using a user plane tunnel corresponding to the DRB or the logical channel, and then the CU may discard a data packet that is in the DRB or the logical channel and that belongs to the first burst.

There may be a plurality of implementations in which the DU sends the discarding indication information of the corresponding DRBs or the corresponding logical channels to the CU. For example, if determining that an air interface transmission deadline of the first burst is reached, the DU may send the discarding indication information of the corresponding DRBs or the corresponding logical channels to the CU. For another example, if determining that the data packet that belongs to the first burst exceeds a transmission delay requirement, the DU may send the discarding indication information of the corresponding DRBs or the corresponding logical channels to the CU. For example, if DRBs corresponding to the M QoS flows include a DRB 1, a DRB 2, and a DRB 3, there is an association relationship among the DRB 1, the DRB 2, and the DRB 3. After determining that the air interface transmission deadline of the first burst is reached, the DU may send discarding indication information corresponding to the DRB 1, the DRB 2, and the DRB 3 to the CU.

### Embodiment 6

In Embodiment 6, a possible implementation is described by using an example in which the network device is the network device shown in FIG. 2c.

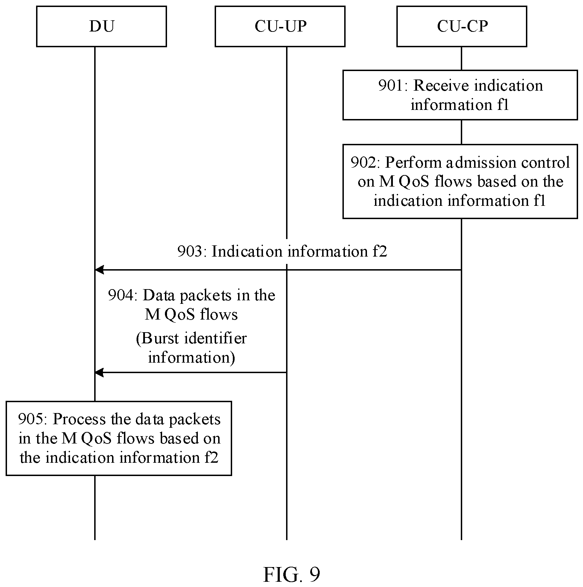

FIG. 9 is a schematic flowchart corresponding to a communication method according to Embodiment 6 of this application. As shown in FIG. 9, the method includes the following steps.

Step 901: A CU-CP receives indication information f1.

Herein, the indication information f1 may indicate that there is the association relationship between the M QoS flows. The CU-CP may receive the indication information f1 in a plurality of manners. For example, the CU-CP may receive the indication information f1 from an SMF network element or an AMF network element. For a specific implementation, refer to related descriptions of receiving the indication information a1 by the network device in Embodiment 1.

Step 902: The CU-CP performs admission control on the M QoS flows based on the indication information f1.

Herein, the CU-CP may perform, based on the indication information f1, admission control of simultaneous admission or simultaneous rejection on QoS flows belonging to a same synchronization QoS flow set.

Step 903: The CU-CP sends indication information f2 to a DU. Correspondingly, the DU may receive the indication information f2.

For example, the CU-CP may determine DRBs or LCHs corresponding to the M QoS flows, and send the indication information f2 to the DU. The indication information f2 indicates that there is an association relationship between the DRBs or the LCHs corresponding to the M QoS flows.

Step 904: A CU-UP sends data packets in the M QoS flows to the DU.

For example, after receiving, from a UPF network element, the data packets in the M QoS flows, the CU-UP may send the data packets in the M QoS flows to the DU. Further, the CU-UP may further indicate, to the DU, bursts to which the data packets in the M QoS flows belong. For example, the CU-UP may indicate, to the DU by using an F1 GTP-U header of the data packets, the bursts to which the data packets belong. To be specific, the F1 GTP-U header of the data packet may include burst identifier information.

The CU-UP may determine, in a plurality of manners, the bursts to which the data packets in the M QoS flows belong. For example, the CU-UP may receive indication information f3 from the CU-CP. The indication information f3 indicates a burst identification manner of the data packets. Then, the CU-UP may determine, in the burst identification manner of the data packets, the bursts to which the data packets in the M QoS flows belong.

Step 905: The DU processes the data packets in the M QoS flows based on the indication information f2.

For example, the DU may determine the bursts to which the data packets in the M QoS flows belong; and further process a data packet in the M QoS flows that belongs to a first burst. After processing the data packet that belongs to the first burst, the DU processes a data packet in the M QoS flows that belongs to a second burst.

That the DU processes the data packet in the M QoS flows that belongs to the first burst may include: The DU transmits, to the terminal device, the data packet in the M QoS flows that belongs to the first burst. For a specific implementation, refer to the descriptions of transmitting, by the network device to the terminal device, the data packet in the M QoS flows that belongs to the first burst in Embodiment 1.

Optionally, that the DU processes the data packet in the M QoS flows that belongs to the first burst may alternatively include: The DU sends discarding indication information of the corresponding DRBs or the corresponding logical channels to the CU-UP. The discarding indication information includes identifier information of the first burst. Correspondingly, after receiving the discarding indication information, the CU-UP may discard a data packet that is in the corresponding DRBs or the corresponding logical channels, that belongs to the first burst, and that has not been transmitted to the terminal device. There may be a plurality of implementations in which the DU sends the discarding indication information of the corresponding DRBs or the corresponding logical channels to the CU-UP. For example, if determining that an air interface transmission deadline of the first burst is reached, the DU may send the discarding indication information of the corresponding DRBs or the corresponding logical channels to the CU-UP. For another example, if determining that the data packet that belongs to the first burst exceeds a transmission delay requirement, the DU may send the discarding indication information of the corresponding DRBs or the corresponding logical channels to the CU-UP.

For Embodiment 1 to Embodiment 6, it should be noted that:
(1) Step numbers in the flowcharts described in Embodiment 1 to Embodiment 6 are merely an example of an execution procedure, and do not constitute a limitation on an execution sequence of the steps. In embodiments of this application, there is no strict execution sequence between steps that do not have a time sequence dependency relationship with each other. In addition, not all the steps shown in the flowcharts are mandatory steps, and some steps may be added to or deleted from the flowcharts according to an actual requirement.
(2) The foregoing focuses on differences between different embodiments in Embodiment 1 to Embodiment 6. For other content except the differences, mutual reference may be made among Embodiment 1 to Embodiment 6.
(3) Some messages in a 5G communication system are used in Embodiment 1 to Embodiment 6. However, during specific implementation, different messages or message names may be used. This is not limited in embodiments of this application.

The foregoing mainly describes the solutions provided in embodiments of this application from a perspective of device interaction. It may be understood that, to implement the foregoing functions, the network device, the core network device, or the terminal device may include a corresponding hardware structure and/or a software module for performing each function. A person skilled in the art should easily be aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device, the core network device, or the terminal device may be divided into functional units based on the method examples. For example, each functional unit may be obtained through division based on each corresponding function, or two or more functions may be integrated into one unit. The integrated unit may be implemented in a form of hardware, or may be implemented in a form of a software functional unit.

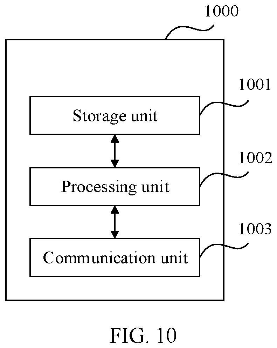

When the integrated unit is used, FIG. 10 is a possible schematic block diagram of an apparatus according to an embodiment of this application. As shown in FIG. 10, an apparatus 1000 may include a processing unit 1002 and a communication unit 1003. The processing unit 1002 is configured to control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data that are of the apparatus 1000.

The apparatus 1000 may be the network device in the foregoing embodiments, or may be a chip disposed in the network device. In Embodiment 2, the network device may be the primary network device or the secondary network device. In Embodiment 3, the network device may be the source network device or the target network device. In Embodiment 5, the network device may include the CU and the DU. In Embodiment 6, the network device may include the CU-CP, the CU-UP, and the DU. The processing unit 1002 may support the apparatus 1000 in performing actions of the network device in the foregoing method examples. Alternatively, the processing unit 1002 mainly performs an internal action of the network device in the method examples, and the communication unit 1003 may support communication between the apparatus 1000 and another device.

Specifically, in an embodiment, the communication unit 1003 is configured to receive indication information. The indication information indicates that there is an association relationship between M QoS flows, and M is an integer greater than 1. Then, the processing unit 1002 is configured to process the M QoS flows based on the indication information.

In a possible design, the processing unit 1002 is specifically configured to admit or reject setup requests of the M QoS flows; or admit or reject modification requests of the M QoS flows.

In a possible design, the processing unit 1002 is specifically configured to determine bursts to which data packets in the M QoS flows belong; and process a data packet in the M QoS flows that belongs to a first burst, and after processing the data packet that belongs to the first burst, process a data packet in the M QoS flows that belongs to a second burst.

In a possible design, the processing unit 1002 is specifically configured to determine, based on burst identifier information of the data packets in the M QoS flows, the bursts to which the data packets in the M QoS flows belong; determine, based on payload information of the data packets in the M QoS flows, the bursts to which the data packets in the M QoS flows belong; determine, based on a distinguishing identifier between different bursts, the bursts to which the data packets in the M QoS flows belong; or determine, based on a transmission time interval between data packets of different bursts, the bursts to which the data packets in the M QoS flows belong.

In a possible design, the communication unit 1003 is further configured to transmit, based on priorities of the M QoS flows, the data packet in the M QoS flows that belongs to the first burst; transmit, based on transmission ratio information of the M QoS flows, the data packet in the M QoS flows that belongs to the first burst; or transmit, in a first in first service manner, the data packet in the M QoS flows that belongs to the first burst.

In a possible design, the processing unit 1002 is specifically configured to: after determining that the data packet that belongs to the first burst exceeds a transmission delay requirement, discard a data packet in the M QoS flows that belongs to the first burst and that has not been transmitted.

In a possible design, the indication information includes M pieces of association information respectively corresponding to the M QoS flows, and the M pieces of association information are the same.

In a possible design, the M QoS flows belong to a first PDU session. The indication information includes association information corresponding to the first PDU session. The association information indicates that the first PDU session is an associated session. There is an association relationship between QoS flows included in the associated session.

In a possible design, the association information includes an association-relationship identifier and/or association-relationship type information.

In a possible design, the association-relationship type information indicates an association-relationship type, and the association-relationship type includes at least one of a first type, a second type, and a third type. The first type indicates to transmit, based on the priorities of the M QoS flows, data packets that are in the M QoS flows and that belong to a same burst. The second type indicates to transmit, based on the transmission ratio information of the M QoS flows, data packets that are in the M QoS flows and that belong to a same burst. The third type indicates to transmit, in the first in first service manner, data packets that are in the M QoS flows and that belong to a same burst.

In a possible design, when the association-relationship type information indicates the second type, the association-relationship type information includes the transmission ratio information, or the indication information further includes the transmission ratio information.

In a possible design, the communication unit 1003 is specifically configured to receive the indication information from a core network device.

In a possible design, the network device is a target network device of a terminal device, and the communication unit 1003 is specifically configured to receive the indication information from a source network device.

In a possible design, the network device is a secondary network device of a terminal device, and the communication unit 1003 is specifically configured to receive the indication information from a primary network device.

In a possible design, the indication information includes at least one of the following: (1) an identifier of an associated session, where there is an association relationship between QoS flows included in the associated session, and the associated session includes the M QoS flows; (2) identifiers of a plurality of QoS flows between which there is an association relationship, where the plurality of QoS flows between which there is the association relationship include the M QoS flows; (3) identifiers of logical channels corresponding to a plurality of QoS flows between which there is an association relationship; (4) identifiers of data radio bearers DRBs corresponding to a plurality of QoS flows between which there is an association relationship; and (5) a plurality of TFTs, where there is an association relationship between QoS flows respectively matching the plurality of TFTs, and the QoS flows respectively matching the plurality of TFTs include the M QoS flows.

In a possible design, the indication information further includes an association-relationship identifier and association-relationship type information.

In a possible design, the communication unit 1003 is specifically configured to receive the indication information from a terminal device.

In a possible design, logical channels corresponding to the M QoS flows are located in different logical channel groups.

The apparatus 1000 may be the core network device in the foregoing embodiments, or may be a chip disposed in the core network device. The processing unit 1002 may support the apparatus 1000 in performing actions of the core network device in the foregoing method examples. Alternatively, the processing unit 1002 mainly performs an internal action of the core network device in the method examples, and the communication unit 1003 may support communication between the apparatus 1000 and another device.

Specifically, in an embodiment, the processing unit 1002 is configured to determine indication information. The indication information indicates that there is an association relationship between M QoS flows, and M is an integer greater than 1. The communication unit 1003 is configured to send the indication information to a network device.

In a possible design, the indication information includes M pieces of association information respectively corresponding to the M QoS flows, and the M pieces of association information are the same.

In a possible design, the M QoS flows belong to a first PDU session. The indication information includes association information corresponding to the first PDU session. The association information indicates that the first PDU session is an associated session. There is an association relationship between QoS flows included in the associated session.

In a possible design, the association information includes an association-relationship identifier and/or association-relationship type information.

In a possible design, the association-relationship type information indicates an association-relationship type, and the association-relationship type includes at least one of a first type, a second type, and a third type. The first type indicates to transmit, based on priorities of the M QoS flows, data packets that are in the M QoS flows and that belong to a same burst. The second type indicates to transmit, based on transmission ratio information of the M QoS flows, data packets that are in the M QoS flows and that belong to a same burst. The third type indicates to transmit, in a first in first service manner, data packets that are in the M QoS flows and that belong to a same burst.

In a possible design, when the association-relationship type information indicates the second type, the association-relationship type information includes the transmission ratio information, or the indication information further includes the transmission ratio information.

The apparatus 1000 may be the terminal device in the foregoing embodiments, or may be a chip disposed in the terminal device. The processing unit 1002 may support the apparatus 1000 in performing actions of the terminal device in the foregoing method examples. Alternatively, the processing unit 1002 mainly performs an internal action of the terminal device in the method examples, and the communication unit 1003 may support communication between the apparatus 1000 and another device.

Specifically, in an embodiment, the communication unit 1003 is configured to receive indication information. The indication information indicates that there is an association relationship between M QoS flows, or the indication information indicates that there is an association relationship between DRBs or LCHs corresponding to M QoS flows, and M is an integer greater than 1. Then, the processing unit 1002 is configured to process the M QoS flows based on the indication information.

In a possible design, the processing unit 1002 is configured to determine bursts to which data packets in the M QoS flows belong; and process a data packet in the M QoS flows that belongs to a first burst, and after processing the data packet that belongs to the first burst, process a data packet in the M QoS flows that belongs to a second burst.

It should be understood that division into the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be separately disposed processing elements, or may be integrated into a chip of the apparatus for implementation. In addition, the units may be stored in a memory in a form of a program, and is invoked by a processing element of the apparatus to perform functions of the units. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the unit in the apparatus may be implemented in a form of scheduling a program by a processing element, the processing element may be a processor, for example, a general-purpose central processing unit (central processing unit, CPU), or another processor that can invoke the program. For still another example, the units may be integrated and implemented in a form of a system-on-a-chip (system-on-a-chip, SoC).

The foregoing unit for reception is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented by a chip, the sending unit is an interface circuit that is of the chip and that is configured to send a signal to another chip or apparatus.

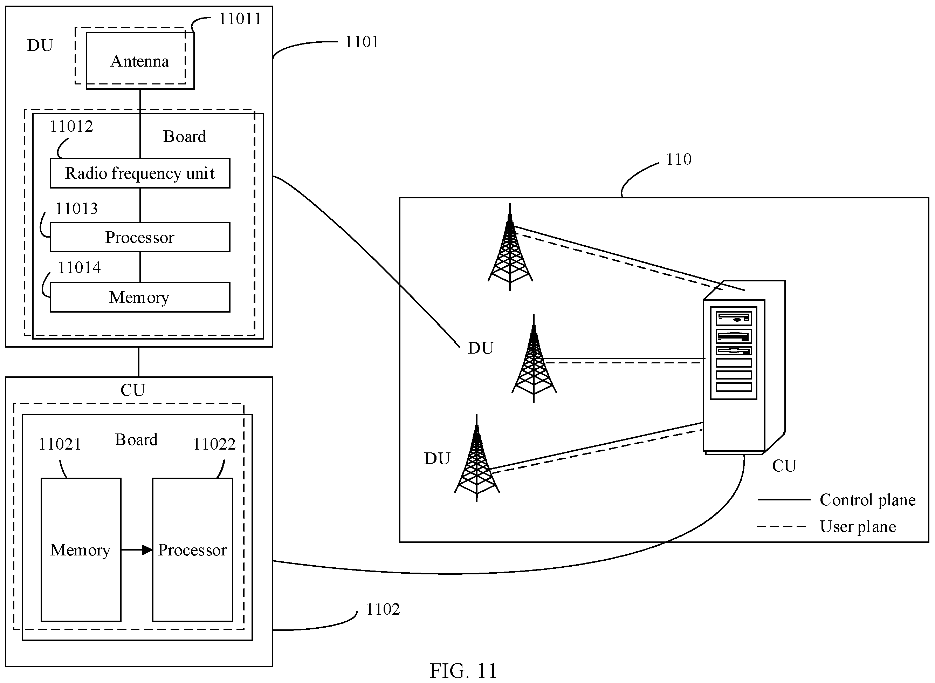

FIG. 11 is a schematic diagram of a structure of a network device according to an embodiment of this application. The network device (or a base station) may be used in the system architecture shown in FIG. 1, to perform a function of the network device in the foregoing method embodiments. The network device 110 may include one or more DUs 1101 and one or more CUs 1102. The DU 1101 may include at least one antenna 11011, at least one radio frequency unit 11012, at least one processor 11013, and at least one memory 11014. The DU 1101 is mainly configured to: receive and send a radio frequency signal, perform conversion between a radio frequency signal and a baseband signal, and perform partial baseband processing. The CU 1102 may include at least one processor 11022 and at least one memory 11021.

The CU 1102 is mainly configured to perform baseband processing, control the network device, and the like. The DU 1101 and the CU 1102 may be physically disposed together, or may be physically disposed separately, that is, a distributed base station. The CU 1102 is a control center of the network device, may also be referred to as a processing unit, and is mainly configured to complete a baseband processing function. For example, the CU 1102 may be configured to control the network device to perform an operation procedure related to the network device in the foregoing method embodiments.

In addition, optionally, the network device 110 may include one or more radio frequency units, one or more DUs, and one or more CUs. The DU may include the at least one processor 11013 and the at least one memory 11014, the radio frequency unit may include the at least one antenna 11011 and the at least one radio frequency unit 11012, and the CU may include the at least one processor 11022 and the at least one memory 11021.

In an example, the CU 1102 may include one or more boards, and a plurality of boards may jointly support a radio access network (for example, a 5G network) of a single access standard, or may separately support radio access networks (such as an LTE network, a 5G network, or another network) of different access standards. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board. The DU 1101 may include one or more boards, and a plurality of boards may jointly support a radio access network (for example, a 5G network) of a single access standard, or may separately support radio access networks (such as an LTE network, a 5G network, or another network) of different access standards. The memory 11014 and the processor 11013 may serve one or more boards. In other words, a memory and a processor may be disposed on each board. Alternatively, a plurality of boards may share a same memory and a same processor. In addition, a necessary circuit may further be disposed on each board.

The network device shown in FIG. 11 can implement the processes related to the network device in the method embodiments shown in FIG. 5, FIG. 6, or FIG. 7. Operations and/or functions of the modules in the network device shown in FIG. 11 are intended to implement the corresponding procedures in the foregoing method embodiments. For details, refer to the descriptions in the foregoing method embodiments. To avoid repetition, detailed descriptions are properly omitted herein.

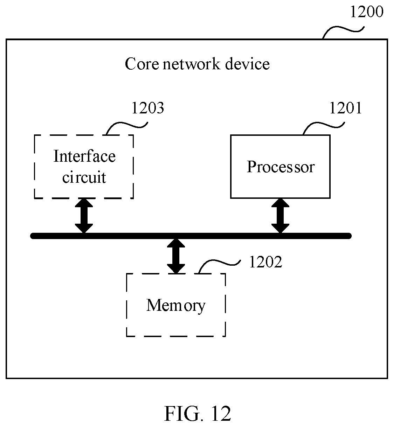

FIG. 12 is a schematic diagram of a structure of a core network device according to an embodiment of this application. The core network device may be the SMF network element or the AMF network element in the foregoing embodiments, and is configured to implement operations of the SMF network element or the AMF network element in the foregoing embodiments.

As shown in FIG. 12, the core network device 1200 may include a processor 1201, a memory 1202, and an interface circuit 1203. The processor 1201 may be configured to process a communication protocol and communication data, and control a communication apparatus. The memory 1202 may be configured to store the program and data, and the processor 1201 may perform, based on the program, the method performed by the SMF network element or the AMF network element in embodiments of this application. The interface circuit 1203 may be used for communication between the core network device 1200 and another device. The communication may be wired communication or wireless communication. The interface circuit may be, for example, a service-based communication interface.

Alternatively, the memory 1202 may be externally connected to the core network device 1200. In this case, the core network device 1200 may include the interface circuit 1203 and the processor 1201. Alternatively, the interface circuit 1203 may be externally connected to the core network device 1200. In this case, the core network device 1200 may include the memory 1202 and the processor 1201. When both the interface circuit 1203 and the memory 1202 are externally connected to the core network device 1200, the communications apparatus 1200 may include the processor 1201.

The core network device shown in FIG. 12 can implement the processes related to the core network device in the method embodiments shown in FIG. 5, FIG. 6, or FIG. 7. Operations and/or functions of the modules in the core network device shown in FIG. 12 are intended to implement the corresponding procedures in the foregoing method embodiments. For details, refer to the descriptions in the foregoing method embodiments. To avoid repetition, detailed descriptions are properly omitted herein.

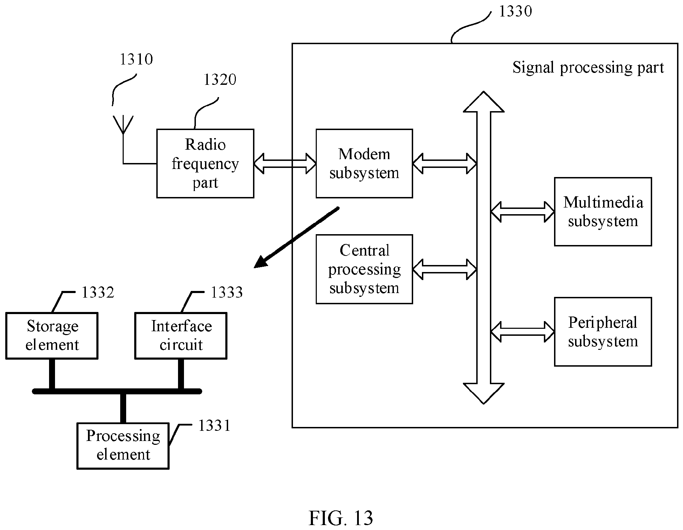

FIG. 13 is a schematic diagram of a structure of a terminal device according to an embodiment of this application. The terminal device may be the terminal device in the foregoing embodiments, and may be configured to implement operations of the terminal device in the foregoing embodiments. As shown in FIG. 13, the terminal device includes an antenna 1310, a radio frequency part 1320, and a signal processing part 1330. The antenna 1310 is connected to the radio frequency part 1320. In a downlink direction, the radio frequency part 1320 receives, by using the antenna 1310, information sent by a network device; and sends, to the signal processing part 1330 for processing, the information sent by the network device. In an uplink direction, the signal processing part 1330 processes information of the terminal device, and sends the information of the terminal device to the radio frequency part 1320. The radio frequency part 1320 processes the information of the terminal device, and then sends processed information to the network device through the antenna 1310.

The signal processing part 1330 may include a modem subsystem, configured to process data at each communication protocol layer. The signal processing part 1330 may further include a central processing subsystem, configured to process an operating system and an application layer that are of the terminal device. In addition, the signal processing part 1330 may further include another subsystem, for example, a multimedia subsystem, or a peripheral subsystem. The multimedia subsystem is configured to control a camera or a screen display of the terminal device. The peripheral subsystem is configured to connect to another device. The modem subsystem may be a chip that is separately disposed.

The modem subsystem may include one or more processing elements 1331, for example, include a main control CPU and another integrated circuit. In addition, the modem subsystem may further include a storage element 1332 and an interface circuit 1333. The storage element 1332 is configured to store data and a program. However, a program used to perform the methods performed by the terminal device in the foregoing methods may not be stored in the storage element 1332, but is stored in a memory outside the modem subsystem, and is loaded and used by the modem subsystem when to be used. The interface circuit 1333 is configured to communicate with another subsystem.

The modem subsystem may be implemented by a chip. The chip includes at least one processing element and an interface circuit. The processing element is configured to perform the steps of any method performed by the foregoing terminal device. The interface circuit is configured to communicate with another apparatus. In an implementation, units in the terminal device for implementing the steps in the foregoing methods may be implemented in a form of scheduling a program by a processing element. For example, the apparatus used in the terminal device includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, a program used to perform the methods performed by the terminal device in the foregoing methods may be in a storage element that is located on a different chip from the processing unit, namely, an off-chip storage element. In this case, the processing element invokes or loads the program from the off-chip storage element to the on-chip storage element, to invoke and perform the method performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing methods may be integrated together, and implemented in a form of a SoC. The SoC chip is configured to implement the foregoing methods. At least one processing element and storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by invoking a program by the processing element, and functions of some units may be implemented by the integrated circuit.

It can be learned that the foregoing apparatus used in the terminal device may include at least one processing element and an interface circuit. The at least one processing element is configured to perform any one of the methods that are provided in the foregoing method embodiments and performed by the terminal device. The processing element may perform some or all steps performed by the terminal device in a first manner, to be specific, by invoking a program stored in the storage element; or may perform some or all steps performed by the terminal device in a second manner, to be specific, by using a hardware integrated logic circuit in the processing element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 10. For example, the processing element may be a general-purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 10. The storage element may be implemented by using a memory. A function of the storage element may be the same as a function of the storage unit described in FIG. 10. The storage element may be one memory, or an umbrella term of a plurality of memories.

The terminal device shown in FIG. 13 can implement the processes related to the terminal device in the method embodiments shown in FIG. 5, FIG. 6, or FIG. 7. Operations and/or functions of the modules in the terminal device shown in FIG. 13 are intended to implement the corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise stated, ordinal numbers such as "first" and "second" in embodiments of this application are used to distinguish between a plurality of objects, and are not used to limit an order, a time sequence, priorities, or importance of the plurality of objects.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a first network device, and the method comprises:
receiving indication information, wherein the indication information indicates that there is an association relationship between M quality of service QoS flows, and M is an integer greater than 1; and
processing the M QoS flows based on the indication information.

2. The method according to claim 1, wherein the processing the M QoS flows comprises:
admitting or rejecting setup requests of the M QoS flows; or
admitting or rejecting modification requests of the M QoS flows.

3. The method according to claim 1 or 2, wherein the processing the M QoS flows comprises:
determining bursts to which data packets in the M QoS flows belong; and
processing a data packet in the M QoS flows that belongs to a first burst, and after processing the data packet that belongs to the first burst, processing a data packet in the M QoS flows that belongs to a second burst.

4. The method according to claim 3, wherein the determining bursts to which data packets in the M QoS flows belong comprises:
determining, based on burst identifier information of the data packets in the M QoS flows, the bursts to which the data packets in the M QoS flows belong;
determining, based on payload information of the data packets in the M QoS flows, the bursts to which the data packets in the M QoS flows belong;
determining, based on a distinguishing identifier between different bursts, the bursts to which the data packets in the M QoS flows belong; or
determining, based on a transmission time interval between data packets of different bursts, the bursts to which the data packets in the M QoS flows belong.

5. The method according to claim 3 or 4, wherein the processing a data packet in the M QoS flows that belongs to a first burst comprises:
transmitting, based on priorities of the M QoS flows, the data packet in the M QoS flows that belongs to the first burst;
transmitting, based on transmission ratio information of the M QoS flows, the data packet in the M QoS flows that belongs to the first burst; or
transmitting, in a first in first service manner, the data packet in the M QoS flows that belongs to the first burst.

6. The method according to any one of claims 3 to 5, wherein the processing a data packet in the M QoS flows that belongs to a first burst comprises:
after determining that the data packet that belongs to the first burst exceeds a transmission delay requirement, discarding a data packet in the M QoS flows that belongs to the first burst and that has not been transmitted.

7. The method according to any one of claims 1 to 6, wherein the indication information comprises M pieces of association information respectively corresponding to the M QoS flows, and the M pieces of association information are the same.

8. The method according to any one of claims 1 to 6, wherein the M QoS flows belong to a first protocol data unit PDU session; and
the indication information comprises association information corresponding to the first PDU session, the association information indicates that the first PDU session is an associated session, and there is an association relationship between QoS flows comprised in the associated session.

9. The method according to claim 7 or 8, wherein the association information comprises an association-relationship identifier and/or association-relationship type information.

10. The method according to claim 9, wherein the association-relationship type information indicates an association-relationship type, and the association-relationship type comprises at least one of a first type, a second type, or, a third type;
the first type indicates to transmit, based on the priorities of the M QoS flows, data packets that are in the M QoS flows and that belong to a same burst;
the second type indicates to transmit, based on the transmission ratio information of the M QoS flows, data packets that are in the M QoS flows and that belong to a same burst; and
the third type indicates to transmit, in the first in first service manner, data packets that are in the M QoS flows and that belong to a same burst.

11. The method according to claim 10, wherein when the association-relationship type information indicates the second type, the indication information further comprises the transmission ratio information.

12. The method according to any one of claims 1 to 11, wherein the receiving indication information comprises:
receiving the indication information from a core network device.

13. The method according to any one of claims 1 to 11, wherein the receiving indication information comprises:
receiving the indication information from a second network device, wherein
the second network device is a primary network device of a terminal device, and the first network device is a secondary network device of the terminal device; or the second network device is a source network device of the terminal device, and the first network device is a target network device of the terminal device.

14. The method according to any one of claims 1 to 6, wherein the indication information comprises at least one of the following:
an identifier of an associated session, wherein there is an association relationship between QoS flows comprised in the associated session, and the associated session comprises the M QoS flows;
identifiers of a plurality of QoS flows between which there is an association relationship, wherein the plurality of QoS flows between which there is the association relationship comprise the M QoS flows;
identifiers of logical channels corresponding to a plurality of QoS flows between which there is an association relationship;
identifiers of data radio bearers DRBs corresponding to a plurality of QoS flows between which there is an association relationship; and
a plurality of traffic filtering templates TFTs, wherein there is an association relationship between QoS flows respectively matching the plurality of TFTs, and the QoS flows respectively matching the plurality of TFTs comprise the M QoS flows.

15. The method according to claim 14, wherein the indication information further comprises an association-relationship identifier and association-relationship type information.

16. The method according to any one of claims 1 to 6, 14, or 15, wherein the receiving indication information comprises:
receiving the indication information from a terminal device.

17. The method according to any one of claims 1 to 16, wherein logical channels corresponding to the M QoS flows are located in different logical channel groups.

18. A communication method, wherein the method is applied to a core network device, and the method comprises:
determining indication information, wherein the indication information indicates that there is an association relationship between M QoS flows, and M is an integer greater than 1; and
sending the indication information.

19. The method according to claim 18, wherein the indication information comprises M pieces of association information respectively corresponding to the M QoS flows, and the M pieces of association information are the same.

20. The method according to claim 18, wherein the M QoS flows belong to a first PDU session; and
the indication information comprises association information corresponding to the first PDU session, the association information indicates that the first PDU session is an associated session, and there is an association relationship between QoS flows comprised in the associated session.

21. The method according to claim 19 or 20, wherein the association information comprises an association-relationship identifier and/or association-relationship type information.

22. The method according to claim 21, wherein the association-relationship type information indicates an association-relationship type, and the association-relationship type comprises at least one of a first type, a second type, and a third type;
the first type indicates to transmit, based on priorities of the M QoS flows, data packets that are in the M QoS flows and that belong to a same burst;
the second type indicates to transmit, based on transmission ratio information of the M QoS flows, data packets that are in the M QoS flows and that belong to a same burst; and
the third type indicates to transmit, in a first in first service manner, data packets that are in the M QoS flows and that belong to a same burst.

23. The method according to claim 22, wherein when the association-relationship type information indicates the second type, the indication information further comprises the transmission ratio information.

24. A communication method, wherein the method is applied to a terminal device, and the method comprises:
receiving indication information, wherein the indication information indicates that there is an association relationship between M QoS flows, or the indication information indicates that there is an association relationship between DRBs or LCHs corresponding to M QoS flows, and M is an integer greater than 1; and
processing the M QoS flows based on the indication information.

25. The method according to claim 24, wherein the indication information comprises M pieces of association information respectively corresponding to the M QoS flows, and the M pieces of association information are the same.

26. The method according to claim 24, wherein the M QoS flows belong to a first PDU session; and
the indication information comprises association information corresponding to the first PDU session, the association information indicates that the first PDU session is an associated session, and there is an association relationship between QoS flows comprised in the associated session.

27. The method according to claim 25 or 26, wherein the association information comprises an association-relationship identifier and/or association-relationship type information.

28. The method according to claim 27, wherein the association-relationship type information indicates an association-relationship type, and the association-relationship type comprises at least one of a first type, a second type, and a third type;
the first type indicates to transmit, based on priorities of the M QoS flows, data packets that are in the M QoS flows and that belong to a same burst;
the second type indicates to transmit, based on transmission ratio information of the M QoS flows, data packets that are in the M QoS flows and that belong to a same burst; and
the third type indicates to transmit, in a first in first service manner, data packets that are in the M QoS flows and that belong to a same burst.

29. The method according to claim 28, wherein when the association-relationship type information indicates the second type, the indication information further comprises the transmission ratio information.

30. The method according to any one of claims 24 to 29, wherein the processing the M QoS flows comprises:
determining bursts to which data packets in the M QoS flows belong; and
processing a data packet in the M QoS flows that belongs to a first burst, and after processing the data packet that belongs to the first burst, processing a data packet in the M QoS flows that belongs to a second burst.

31. The method according to claim 30, wherein the determining bursts to which data packets in the M QoS flows belong comprises:
determining, based on burst identifier information of the data packets in the M QoS flows, the bursts to which the data packets in the M QoS flows belong;
determining, based on payload information of the data packets in the M QoS flows, the bursts to which the data packets in the M QoS flows belong;
determining, based on a distinguishing identifier between different bursts, the bursts to which the data packets in the M QoS flows belong; or
determining, based on a transmission time interval between data packets of different bursts, the bursts to which the data packets in the M QoS flows belong.

32. The method according to claim 30 or 31, wherein the processing a data packet in the M QoS flows that belongs to a first burst comprises:
receiving an uplink grant from a network device; and
transmitting, based on the priorities of the M QoS flows and on a resource indicated by the uplink grant, the data packet in the M QoS flows that belongs to the first burst;
transmitting, based on the transmission ratio information of the M QoS flows and on a resource indicated by the uplink grant, the data packet in the M QoS flows that belongs to the first burst; or
transmitting, in the first in first service manner and on a resource indicated by the uplink grant, the data packet in the M QoS flows that belongs to the first burst.

33. The method according to any one of claims 30 to 32, wherein the processing a data packet in the M QoS flows that belongs to a first burst comprises:
after determining that the data packet that belongs to the first burst exceeds a transmission delay requirement, discarding a data packet in the M QoS flows that belongs to the first burst and that has not been transmitted.

34. A communication method, wherein the method is applied to a CU, and the method comprises:
receiving first indication information, wherein the first indication information indicates that there is an association relationship between M QoS flows, the M QoS flows belong to a first PDU session, and M is an integer greater than 1; and
processing the M QoS flows based on the first indication information.

35. The method according to claim 34, wherein the processing the M QoS flows comprises:
admitting or rejecting setup requests of the M QoS flows; or
admitting or rejecting modification requests of the M QoS flows.

36. The method according to claim 34 or 35, wherein the method further comprises:
determining DRBs or LCHs corresponding to the M QoS flows; and
sending second indication information to a DU, wherein the second indication information indicates that there is an association relationship between the DRBs or the LCHs corresponding to the M QoS flows.

37. The method according to claim 36, wherein the second indication information comprises an association-relationship identifier and/or association-relationship type information.

38. The method according to claim 37, wherein the association-relationship type information indicates an association-relationship type, and the association-relationship type comprises at least one of a first type, a second type, and a third type;
the first type indicates to transmit, based on priorities of the M QoS flows, data packets that are in the M QoS flows and that belong to a same burst;
the second type indicates to transmit, based on transmission ratio information of the M QoS flows, data packets that are in the M QoS flows and that belong to a same burst; and
the third type indicates to transmit, in a first in first service manner, data packets that are in the M QoS flows and that belong to a same burst.

39. The method according to claim 38, wherein when the association-relationship type information indicates the second type, the association-relationship type information comprises the transmission ratio information.

40. The method according to any one of claims 34 to 39, wherein the processing the M QoS flows comprises:
sending data packets in the M QoS flows to the DU, wherein the data packets in the M QoS flows comprise burst identifier information.

41. The method according to any one of claims 34 to 40, wherein the processing the M QoS flows comprises:
receiving discarding indication information from the DU, wherein the discarding indication information comprises identifier information of a first burst; and
discarding a data packet that is in a DRB or a logical channel corresponding to the discarding indication information, that belongs to the first burst, and that has not been transmitted.

42. A communication method, wherein the method is applied to a DU, and the method comprises:
receiving second indication information, wherein the second indication information indicates that there is an association relationship between DRBs or LCHs corresponding to M QoS flows; and
processing data packets in the M QoS flows based on the second indication information.

43. The method according to claim 42, wherein the second indication information comprises an association-relationship identifier and/or association-relationship type information.

44. The method according to claim 43, wherein the association-relationship type information indicates an association-relationship type, and the association-relationship type comprises at least one of a first type, a second type, and a third type;
the first type indicates to transmit, based on priorities of the M QoS flows, data packets that are in the M QoS flows and that belong to a same burst;
the second type indicates to transmit, based on transmission ratio information of the M QoS flows, data packets that are in the M QoS flows and that belong to a same burst; and
the third type indicates to transmit, in a first in first service manner, data packets that are in the M QoS flows and that belong to a same burst.

45. The method according to claim 44, wherein when the association-relationship type information indicates the second type, the association-relationship type information comprises the transmission ratio information.

46. The method according to any one of claims 42 to 45, wherein the processing data packets in the M QoS flows comprises:
determining bursts to which the data packets in the M QoS flows belong; and
processing a data packet in the M QoS flows that belongs to a first burst, and after processing the data packet that belongs to the first burst, processing a data packet in the M QoS flows that belongs to a second burst.

47. The method according to claim 46, wherein the processing a data packet in the M QoS flows that belongs to a first burst comprises:
transmitting, based on the priorities of the M QoS flows, the data packet in the M QoS flows that belongs to the first burst;
transmitting, based on the transmission ratio information of the M QoS flows, the data packet in the M QoS flows that belongs to the first burst; or
transmitting, in the first in first service manner, the data packet in the M QoS flows that belongs to the first burst.

48. The method according to claim 46 or 47, wherein the processing a data packet in the M QoS flows that belongs to a first burst comprises:
after determining that the data packet that belongs to the first burst exceeds a transmission delay requirement, sending discarding indication information of the corresponding DRBs or the corresponding logical channels, wherein the discarding indication information comprises identifier information of the first burst, and indicates to discard a data packet that is in the corresponding DRBs or the corresponding logical channels, that belongs to the first burst, and that has not been transmitted.

49. A communication method, wherein the method is applied to a CU-CP, and the method comprises:
receiving first indication information, wherein the first indication information indicates that there is an association relationship between M QoS flows, and the M QoS flows belong to a first PDU session; and
processing the M QoS flows based on the first indication information.

50. The method according to claim 49, wherein the processing the M QoS flows comprises:
admitting or rejecting setup requests of the M QoS flows; or
admitting or rejecting modification requests of the M QoS flows.

51. The method according to claim 49 or 50, wherein the method further comprises:
determining DRBs or LCHs corresponding to the M QoS flows; and
sending second indication information to a DU, wherein the second indication information indicates that there is an association relationship between the DRBs or the LCHs corresponding to the M QoS flows.

52. The method according to claim 51, wherein the second indication information comprises an association-relationship identifier and/or association-relationship type information.

53. The method according to claim 52, wherein the association-relationship type information indicates an association-relationship type, and the association-relationship type comprises at least one of a first type, a second type, and a third type;
the first type indicates to transmit, based on priorities of the M QoS flows, data packets that are in the M QoS flows and that belong to a same burst;
the second type indicates to transmit, based on transmission ratio information of the M QoS flows, data packets that are in the M QoS flows and that belong to a same burst; and
the third type indicates to transmit, in a first in first service manner, data packets that are in the M QoS flows and that belong to a same burst.

54. The method according to claim 53, wherein when the association-relationship type information indicates the second type, the association-relationship type information comprises the transmission ratio information.

55. A communication method, wherein the method is applied to a CU-UP, and the method comprises:
receiving discarding indication information from a DU, wherein the discarding indication information comprises identifier information of a first burst; and
discarding a data packet that is in a DRB or a logical channel corresponding to the discarding indication information, that belongs to the first burst, and that has not been transmitted.

56. A communication apparatus, comprising units configured to perform steps of the method according to any one of claims 1 to 17.

57. A communication apparatus, comprising at least one processor and an interface circuit, wherein the at least one processor is configured to communicate with another apparatus through the interface circuit and perform the method according to any one of claims 1 to 17.

58. A communication apparatus, comprising a processor configured to invoke a program stored in a memory, to perform the method according to any one of claims 1 to 17.

59. A communication apparatus, comprising units configured to perform steps of the method according to any one of claims 18 to 23.

60. A communication apparatus, comprising at least one processor and an interface circuit, wherein the at least one processor is configured to communicate with another apparatus through the interface circuit and perform the method according to any one of claims 18 to 23.

61. A communication apparatus, comprising a processor configured to invoke a program stored in a memory, to perform the method according to any one of claims 18 to 23.

62. A communication apparatus, comprising units configured to perform steps of the method according to any one of claims 24 to 33.

63. A communication apparatus, comprising at least one processor and an interface circuit, wherein the at least one processor is configured to communicate with another apparatus through the interface circuit and perform the method according to any one of claims 24 to 33.

64. A communication apparatus, comprising a processor configured to invoke a program stored in a memory, to perform the method according to any one of claims 24 to 33.

65. A communication apparatus, comprising units configured to perform steps of the method according to any one of claims 34 to 41.

66. A communication apparatus, comprising at least one processor and an interface circuit, wherein the at least one processor is configured to communicate with another apparatus through the interface circuit and perform the method according to any one of claims 34 to 41.

67. A communication apparatus, comprising a processor configured to invoke a program stored in a memory, to perform the method according to any one of claims 34 to 41.

68. A communication apparatus, comprising units configured to perform steps of the method according to any one of claims 42 to 48.

69. A communication apparatus, comprising at least one processor and an interface circuit, wherein the at least one processor is configured to communicate with another apparatus through the interface circuit and perform the method according to any one of claims 42 to 48.

70. A communication apparatus, comprising a processor configured to invoke a program stored in a memory, to perform the method according to any one of claims 42 to 48.

71. A communication apparatus, comprising units configured to perform steps of the method according to any one of claims 49 to 54.

72. A communication apparatus, comprising at least one processor and an interface circuit, wherein the at least one processor is configured to communicate with another apparatus through the interface circuit and perform the method according to any one of claims 49 to 54.

73. A communication apparatus, comprising a processor configured to invoke a program stored in a memory, to perform the method according to any one of claims 49 to 54.

74. A communication apparatus, comprising units configured to perform steps of the method according to claim 55.

75. A communication apparatus, comprising at least one processor and an interface circuit, wherein the at least one processor is configured to communicate with another apparatus through the interface circuit and perform the method according to claim 55.

76. A communication apparatus, comprising a processor configured to invoke a program stored in a memory, to perform the method according to claim 55.

77. A communication system, wherein the communication system comprises the communication apparatus according to claim 56, 57, or 58, and the communication apparatus according to claim 59, 60, or 61;
the communication system comprises the communication apparatus according to claim 65, 66, or 67, the communication apparatus according to claim 68, 69, or 70, and the communication apparatus according to claim 59, 60, or 61; or
the communication system comprises the communication apparatus according to claim 71, 72, or 73, the communication apparatus according to claim 74, 75, or 76, the communication apparatus according to claim 68, 69, or 70, and the communication apparatus according to claim 59, 60, or 61.

78. The communication system according to claim 77, wherein the communication system further comprises the communication apparatus according to claim 62, 63, or 64.

79. A communication system, wherein the communication system comprises a first network device and a core network device, wherein
the core network device is configured to determine indication information, wherein the indication information indicates that there is an association relationship between M QoS flows, and M is an integer greater than 1; and send the indication information to the first network device; and
the first network device is configured to receive the indication information from the core network device.

80. The communication system according to claim 79, wherein the first network device is further configured to process the M QoS flows based on the indication information.

81. The communication system according to claim 79, wherein the communication system further comprises a second network device, wherein
the first network device is further configured to send the indication information to the second network device; and
the second network device is configured to receive the indication information from the first network device, and process the M QoS flows based on the indication information, wherein
the first network device is a primary network device of a terminal device, and the second network device is a secondary network device of the terminal device.

82. The communication system according to claim 79 or 80, wherein the communication system further comprises a second network device, wherein
the first network device is further configured to send the indication information to the second network device; and
the second network device is configured to receive the indication information from the first network device, and process the M QoS flows based on the indication information, wherein
the first network device is a source network device of a terminal device, and the second network device is a target network device of the terminal device.

83. A computer-readable storage medium, comprising a program, wherein when the program is run by a processor, the method according to any one of claims 1 to 55 is performed.

84. A computer program product, wherein when a computer reads and executes the computer program product, the computer is enabled to perform the method according to any one of claims 1 to 55.

85. A chip, wherein the chip comprises a processor, and the processor is coupled to a memory and is configured to read and execute a software program stored in the memory, to implement the method according to any one of claims 1 to 55.
